# EUROPEAN PATENT APPLICATION

(11) **EP 4 596 516 A1**
(43) Date of publication of application: **06.08.2025**
(21) Application number: 23872562.6
(22) Date of filing: 28.09.2023
(51) Int. Cl.: C03C 27/12, B32B 7/023, B32B 7/027, B32B 17/10, B32B 27/08, B32B 27/20, B60J 1/00

(54) **INTERMEDIATE FILM FOR LAMINATED GLASS, AND LAMINATED GLASS**

(30) Priority: 30.09.2022 JP 2022158982
(71) Applicant: SEKISUI CHEMICAL CO., LTD., Osaka-shi Osaka 530-8565 (JP)
(72) Inventor: ISHIDA, Jun, 6045JB Roermond (NL)
(74) Representative: Ter Meer Steinmeister & Partner
(86) International application number: PCT/JP2023/035527
(87) International publication number: WO 2024/071342

(57) **Abstract**

An interlayer film for laminated glass comprises one or more resin layers wherein at least one of the resin layers contains a colorant, and wherein when the absolute values of the differences between the maximum and minimum values of L*, a* and b* measured from one end to the other end of a laminated glass including two sheets of clear glass with a thickness of 2.5 mm bonded through the interlayer film for laminated glass are represented by ΔL*, Δa* and Δb*, respectively, the value of ΔL*+Δa*+Δb* is 0.5% or more.

## Description

### Technical Field

The present invention relates to an interlayer film for laminated glass for use in a laminated glass.

### Background Art

A laminated glass is safe because glass fragments are less likely to scatter even when damaged by an external impact, being widely used as a window glass of vehicles such as automobiles, railway cars, airplanes and ships and a window glass of buildings, etc. As the laminated glass, an integrated one in which an interlayer film for laminated glass containing a resin component such as polyvinyl acetal resin and ethylene-vinyl acetate copolymer resin is interposed between a pair of sheet glasses is widely known.

Conventionally, as the interlayer film for laminated glass, a colored interlayer film including a colored layer provided in the entire interlayer film or in a portion of the interlayer film to color the entire or the portion of the interlayer film is widely known. For example, in automobile windshields, a colored layer is provided on the upper part of the glass to form a colored layer as shading region. The shading region has a lower transmittance than other portions for use to protect passengers including a driver from direct sunlight (for example, refer to Patent Literature 1).

### Citation List

### Patent Literature

PTL1: International Publication No. WO 2018-225797

### Summary Of Invention

### Technical Problem

However, while conventional colored interlayer films can change color shade from one end to the other end of the interlayer film, there has been little consideration given to how to change the color shade. Accordingly, it cannot be said that colored interlayer films with excellent aesthetic quality have been adequately provided.

Accordingly, an objective of the present invention is to provide an interlayer film for laminated glass with high aesthetic quality.

### Solution to Problem

As a result of extensive study, the present inventor has focused on the amount of change in each of L*, a* and b* in a specific direction of an interlayer film for laminated glass, and the amount of change in visible light transmittance (Tv), and has found that by controlling the amounts of change in L*, a* and b*, and the amount of change in Tv to certain ranges, the aesthetic quality of the interlayer film for laminated glass can be enhanced, so that the present invention has been completed as described below. That is, the present invention provides the following items [1] to [20].
[1] An interlayer film for laminated glass comprising one or more resin layers wherein at least one of the resin layers contains a colorant, and
   wherein when the absolute values of the differences between the maximum and minimum values of L*, a* and b* measured from one end to the other end of a laminated glass including two sheets of clear glass with a thickness of 2.5 mm bonded through the interlayer film for laminated glass are represented by ΔL*, Δa* and Δb*, respectively, the value of ΔL*+Δa*+Δb* is 0.5 or more.
[2] The interlayer film for laminated glass according to the item [1], satisfying at least one of ΔL*≥Δa* or ΔL*≥Δb*.
[3] The interlayer film for laminated glass according to the item [1], satisfying at least one of ΔL*<Δa* or ΔL*<Δb*.
[4] The interlayer film for laminated glass according to the item [2], satisfying ΔL*≥Δa* and ΔL*<Δb*, or satisfying ΔL*≥Δb* and ΔL*<Δa*.
[5] An interlayer film for laminated glass comprising one or more resin layers wherein at least one of the resin layers contains a colorant, and
   wherein the absolute value of the difference between the maximum and minimum values of visible light transmittance (Tv) measured from one end to the other end of a laminated glass including two sheets of clear glass with a thickness of 2.5 mm bonded through the interlayer film for laminated glass is 0.1% or more.
[6] The interlayer film for laminated glass according to the item [5], having at least one of a region in which the visible light transmittance (Tv) decreases from one end to the other end or a region in which the visible light transmittance (Tv) increases from one end to the other end.
[7] The interlayer film for laminated glass according to any one of the items [1] to [4], wherein the absolute value of the difference between maximum and minimum values of visible light transmittance (Tv) measured across the laminated glass from one end to the other end is 0.1% or more.
[8] The interlayer film for laminated glass according to the item [7], having at least one of a region in which the visible light transmittance (Tv) decreases from one end to the other end or a region in which the visible light transmittance (Tv) increases from one end to the other end.
[9] The laminated film interlayer film according to any one of the items [1] to [8], wherein at least one of the one or more resin layers contains at least one selected from the group consisting of a polyvinyl acetal resin and an ethylene-vinyl acetate copolymer resin.
[10] The interlayer film for laminated glass according to the item [9], having a layer other than the resin layer including at least one selected from the group consisting of a polyvinyl acetal resin and an ethylene-vinyl acetate copolymer resin.
[11] The interlayer film for laminated glass according to any one of the items [1] to [10], comprising at least two resin layers such that at least one of L*, a* and b* measured for a laminated glass for measurement including two sheets of clear glass with a thickness of 2.5 mm bonded through each of the resin layers is different from each other.
[12] The interlayer film for laminated glass according to any one of the items [1] to [11], wherein at least one of the one or more resin layers has a glass transition temperature of 15°C or more.
[13] The interlayer film for laminated glass according to any one of the items [1] to [12], wherein at least one of the one or more resin layers has a glass transition temperature of less than 15°C.
[14] The interlayer film for laminated glass according to any one of the items [1] to [13], wherein the area ratio of a region having a visible light transmittance (Tv) of 60% or more measured in the laminated glass is 30% or more.
[15] The interlayer film for laminated glass according to any one of the items [1] to [14], wherein the minimum value of visible light transmittance (Tv) measured in the laminated glass is 50% or more.
[16] The interlayer film for laminated glass according to any one of the items [1] to [15], wherein the minimum value of visible light transmittance (Tv) measured in the laminated glass is 70% or more.
[17] The interlayer film for laminated glass according to any one of the items [1] to [16], comprising at least one resin layer such that a visible light transmittance (Tv) measured for a laminated glass for measurement having two sheets of clear glass with a thickness of 2.5 mm bonded through the resin layer is less than 87%.
[18] The interlayer film for laminated glass according to any one of the items [1] to [17], having a thickness of 2 mm or less.
[19] The interlayer film for laminated glass according to any one of the items [1] to [18], having a content of colorant of 0.00001 mass% or more and 7 mass% or less.
[20] A laminated glass comprising an interlayer film for laminated glass according to any one of the items [1] to [19], and a pair of laminated glass members,
wherein the interlayer film for laminated glass is disposed between a pair of the laminated glass members.

### Advantageous Effects of Invention

According to the present invention, an interlayer film for laminated glass having high aesthetic quality can be provided.

### Brief Description of Drawings

[Fig. 1] Fig. 1 includes a cross-sectional view showing an example of an interlayer film for laminated glass on the upper side, and an image diagram showing an example of Tv values of the interlayer film on the lower side.
[Fig. 2] Fig. 2 includes a cross-sectional view showing an example of an interlayer film for laminated glass on the upper side, and an image diagram showing an example of Tv values of the interlayer film on the lower side.
[Fig. 3] Fig. 3 includes a cross-sectional view showing an example of an interlayer film for laminated glass on the upper side, and an image diagram showing an example of Tv values of the interlayer film on the lower side.
[Fig. 4] Fig. 4 includes a cross-sectional view showing an example of an interlayer film for laminated glass on the upper side, and an image diagram showing an example of Tv values of the interlayer film on the lower side.
[Fig. 5] Fig. 5 includes a cross-sectional view showing an example of an interlayer film for laminated glass on the upper side, and an image diagram showing an example of Tv values of the interlayer film on the lower side.
[Fig. 6] Fig. 6 includes a cross-sectional view showing an example of an interlayer film for laminated glass on the upper side, and an image diagram showing an example of Tv values of the interlayer film on the lower side.
[Fig. 7] Fig. 7 includes a cross-sectional view showing an example of an interlayer film for laminated glass on the upper side, and an image diagram showing an example of Tv values of the interlayer film on the lower side.

### Description of Embodiment

The present invention is described in more detail with reference to embodiments.

### <Interlayer film for laminated glass>

An interlayer film for laminated glass of the present invention includes one or more resin layers, and at least one of the resin layers is a colored layer containing a colorant.

The interlayer film of the present invention allows a laminated glass including two sheets of clear glass with a thickness of 2.5 mm bonded through the interlayer film for laminated glass to satisfy any one of the following requirements (A) and (B).

Requirement (A): When the absolute values of the differences between the maximum and minimum values of L*, a* and b* measured from one end to the other end of the laminated glass are represented by ΔL*, Δa* and Δb*, respectively, the value of ΔL*+Δa*+Δb* is 0.5 or more.

Requirement (B): The absolute value of the difference between maximum and minimum values of visible light transmittance (Tv) measured across the laminated glass from one end to the other end is 0.1% or more.

### <Requirement (A)>

In the present invention, with a value of ΔL*+Δa*+Δb* of less than 0.5, the change in color shade of the interlayer film is insufficient, so that the aesthetic quality may not be sufficiently enhanced. From the viewpoint of further enhancing the aesthetic quality with change in color of the interlayer film above a certain level, the value of ΔL*+Δa*+Δb* is preferably 0.6 or more, more preferably 0.7 or more, and may be 0.8 or more, 0.9 or more, 1 or more, 1.1 or more, or 1.2 or more. Also, from the viewpoint of further enhancing the aesthetic quality, the value is still more preferably 1.5 or more, and furthermore preferably 3 or more. In order to make a specific color pattern with a large change in color, for example, a value of 10 or more may be also preferred.

Also, in order to make production easy and to further enhance the aesthetic quality with a fixed change in color, the value of ΔL*+Δa*+Δb* is preferably 100 or less, more preferably 97 or less, and still more preferably 75 or less. However, in order to make a calm impression with relatively suppressed change in color, the value of ΔL*+Δa*+Δb* may be made smaller to an extent, and may be, for example, 30 or less, 20 or less, or 15 or less. Incidentally, the lower limit and the upper limit of the requirement (A) may be in any combination.

Here, the values of L*, a* and b* described above are obtained for one surface of the laminated glass by measuring the spectral transmittance using a spectrophotometer in accordance with JIS R3212 (2015), and using CIE standard illuminant D65 and 10° visual field color matching function specified in JIS Z 8781-1 (2012), JIS Z 8781-2 (2012), and JIS Z 8781-4 (2013).

It is preferable that measurement be performed at 50 mm intervals from one end to the other end. In the case where the number of measurement points is less than 20 in measurement at 50 mm intervals, the measurement interval may be adjusted to have 20 measurement points. Detailed measurement conditions are described in the following Examples.

The clear glass used to obtain a laminated glass has a thickness of 2.5 mm and a visible light transmittance of 90.5% measured in accordance with JIS R 3106:1998. The clear glass has a*=-0.6, b*=0.2, and a haze of 0.2% or less, obtained using CIE standard illuminant D65 and 10° visual field color matching function specified in JIS Z 8781-1 (2012), JIS Z 8781-2 (2012), and JIS Z 8781-4 (2013). The clear glass is also called reference clear glass.

The direction headed from one end to the other end of the interlayer film may be any direction along the surface direction of the interlayer film, and is preferably the TD direction (transverse direction). In the case where the direction from one end to the other end is TD, it is easier to change the thickness of each resin layer from one end to the other end in production of an interlayer film by extrusion forming. Accordingly, the requirements (A) and (B), and the following requirements (A-1) and (A-2) tend to be easily satisfied.

**In** the present invention, it is preferable that the interlayer film that satisfies the requirement (A) satisfy the following requirement (A-1) in one embodiment.
Requirement (A-1): At least one of ΔL*≥Δa* or ΔL*≥Δb* is satisfied.

**In** the present invention, the change in color density is relatively dominant in an interlayer film that satisfies the requirement ΔL*≥Δa* or ΔL*≥Δb*. The aesthetic quality of the interlayer film that satisfies such a requirement can be enhanced by changing the color tone while maintaining a certain degree of uniformity in the tint. It is more preferable that an interlayer film that satisfies the requirement (A-1) satisfy both requirements ΔL*≥Δa* and ΔL*≥Δb*, from the viewpoint of enhancing the aesthetic quality by more dominant change in color density.

In the case of ΔL*≥Δa*, the difference is preferably 0.2 or more, more preferably 1.5 or more, still more preferably 5 or more, and further preferably 10 or more. From the viewpoint of giving a strong impression of design change due to the change in color tone, the difference may be made larger, for example, to 20 or more. Also, from the viewpoint of aesthetic quality, in the case of ΔL*≥Δa*, the difference is preferably 80 or less, more preferably 70 or less, and still more preferably 40 or less. However, in the case of a design with calm impression, the difference may be 30 or less. Incidentally, the lower and upper limits of the difference between ΔL* and Δa* may be in any combination.

In the case of ΔL*≥Δb*, the difference is preferably 0.2 or more, more preferably 1.5 or more, still more preferably 5 or more, and further preferably 10 or more. From the viewpoint of giving a strong impression of design change due to the change in color tone, the difference may be even larger, for example, to 20 or more. Also, from the viewpoint of aesthetic quality, in the case of ΔL*≥Δb*, the difference therebetween is preferably 80 or less, more preferably 70 or less, and still more preferably 40 or less. However, in the case of a design with calm impression, the difference may be 30 or less. The lower and upper limits of the difference between ΔL* and Δb* may be in any combination.

In addition, it is preferable that the interlayer film satisfying the requirement (A) satisfy the following requirement (A-2), in one embodiment.

Requirement (A-2): At least one of ΔL*<Δa* or ΔL*<Δb* is satisfied. The interlayer film that satisfies the requirement ΔL*<Δa* or ΔL*<Δb* has relatively dominant change in hue. The interlayer film that satisfies the requirement allows the aesthetic quality to be enhanced by changing coloration while maintaining a certain degree of unity in color tone. It is more preferable that the interlayer film that satisfies the requirement (A-2) satisfy both requirements ΔL*<Δa* and ΔL*<Δb* in order to make the change in hue more dominant.

In the case of ΔL*<Δa*, the difference is preferably 0.2 or more, more preferably 0.5 or more, still more preferably 2 or more, and further preferably 2.5 or more, from the viewpoint of making the change in hue more dominant. Also, in the case of ΔL*<Δa*, the difference is preferably 50 or less, more preferably 40 or less, and still more preferably 20 or less, from the viewpoint of giving the design a calm impression. The lower and upper limits of the difference between ΔL* and Δa* may be in any combination.

In the case of ΔL*<Δb*, the difference is preferably 0.2 or more, more preferably 0.5 or more, and still more preferably 1.5 or more, from the viewpoint of making the change in hue more dominant. Also, in the case of ΔL*<Δb*, the difference is preferably 50 or less, more preferably 40 or less, still more preferably 20 or less, and may be 10 or less, from the viewpoint of giving the design a calm impression. The lower and upper limits of the difference between ΔL* and Δb* may be in any combination.

Either one of the requirements (A-1) and (A-2) may be satisfied, or both requirements (A-1) and (A-2) may be satisfied. In other words, the interlayer film of the present invention may satisfy both ΔL*≥Δa* and ΔL*<Δb*, or may satisfy both ΔL*≥Δb* and ΔL*<Δa*. With both of the requirements (A-1) and (A-2) satisfied, the color density and hue change in a well-balanced manner, so that high aesthetic quality tends to be ensured easily.

### <Requirement (B)>

As shown in the requirement (B), the interlayer film according to one embodiment of the present invention has an absolute value of the difference between the maximum and minimum visible light transmittance (Tv) measured from one end to the other end of the laminated glass (hereinafter, referred to as "ΔTv" in some cases) of 0.1% or more. In the case where ΔTv is less than 0.1%, the color density of coloring with a colorant does not change appropriately from one end to the other end, so that the aesthetic quality may not be enhanced.

From the viewpoint of further enhancing the aesthetic quality of the interlayer film with a certain degree or more of the change in color density, a higher value of ΔTv is better, preferably 0.3% or more, more preferably 0.5% or more, and may be 0.8% or more, or 1% or more. Further, the value of ΔTv is still more preferably 1.5% or more, further preferably 2% or more, furthermore preferably 3% or more, and even furthermore preferably 5% or more. Also, in order to give a specific color pattern with a large change in color density, the value of ΔTv may be, for example, 10% or more.

In order to make easy production and to further enhance the aesthetic quality with uniform change in color, the value of ΔTv is preferably 90% or less, more preferably 80% or less, still more preferably 70% or less, further preferably 50% or less, and furthermore preferably 30% or less. However, in order to give a more calm impression with relatively suppressed change in color density, the value of ΔTv may be made smaller to some extent, for example, may be 20% or less.

Incidentally, the lower and upper limits of ΔTv may be in any combination.

The interlayer film of the present invention may satisfy either the requirement (B) or requirement (A), and preferably satisfies both of the requirements from the viewpoint of further enhancing the aesthetic quality. With both of the requirements satisfied, both the color density and the hue are changed in a well-balanced manner, so that the aesthetic quality can be further enhanced. Similarly, it is also preferable that the interlayer film of the present invention satisfy at least one of the requirements (A-1) and (A-2) in addition to the requirements (A) and (B).

In the present invention, the requirement (A), requirement (A-1), requirement (A-2), requirement (B), and the preferred values of the respective requirements can be satisfied, for example, by changing the thickness of the colored layer from one end to the other end as described below. Further, by providing two or more colored layers and changing the thickness of the respective colored layers from one end to the other end, the requirement (A), requirement (A-1), requirement (A-2), requirement (B), and the preferred values of the respective requirements can be more easily satisfied.

It is preferable that the interlayer film of the present invention satisfying the requirement (B) have at least either one of a region where the visible light transmittance (Tv) increases from one end to the other end (hereinafter referred to as a "Tv-increasing region") and a region where the visible light transmittance (Tv) decreases (hereinafter also referred to as a "Tv-decreasing region"). By having at least one of the Tv-decreasing region or the Tv-increasing region, a region with change in color density extends to a certain extent, so that the aesthetic quality tends to be easily enhanced.

The Tv-increasing region refers to a region with Tv's measured sequentially at measurement points spaced at fixed intervals (at 50-mm intervals) from one end to the other end as shown in Examples described below, which are higher than a Tv at a predetermined point at two or more subsequent and consecutive measurement points.

Similarly, the Tv-decreasing region refers to a region with Tv's measured sequentially at measurement points spaced at fixed intervals from one end to the other end, which are lower than a Tv at a predetermined point at two or more subsequent and consecutive measurement points.

From the viewpoint of enhancing aesthetic quality with the region having change in color density extending to a certain degree, in the Tv-increasing region, Tv's measured sequentially at measurement points spaced at fixed intervals (at 50-mm intervals) from one end to the other end are higher than a Tv at a predetermined point more preferably at three or more subsequent and consecutive measurement points, still more preferably four or more subsequent and consecutive measurement points, and further preferably five or more subsequent and consecutive measurement points. Similarly, in the Tv-decreasing region, Tv's measured sequentially at measurement points spaced at fixed intervals from one end to the other end are lower than a Tv at a predetermined point more preferably at three or more subsequent and consecutive measurement points, still more preferably four or more subsequent and consecutive measurement points, and further preferably five or more subsequent and consecutive measurement points.

The difference between the maximum and minimum values of visible light transmittance (Tv) in the Tv increasing region and the Tv decreasing region is not particularly limited. In order to impart aesthetic quality having change in the color density, the difference between the maximum and minimum values of visible light transmittance (Tv) in the Tv-increasing region and the Tv-decreasing region is, for example, more than 0%, preferably 0.1% or more, may be 0.4% or more, 0.5% or more, 1% or more, 5% or more, 10% or more, 20% or more, 30% or more, 40% or more, 50% or more, 60% or more, 70% or more, and is usually 100% or less, preferably 90% or less. Incidentally, these lower and upper limits may be in any combination.

In the present invention, from the viewpoint of aesthetic quality, it is preferable to have both Tv-increasing regions and Tv-decreasing regions. The number of Tv-decreasing regions or Tv-increasing regions is not particularly limited, and the total number of Tv decreasing regions and Tv increasing regions is preferably 2 or more, and may be 3 or more or 5 or more. From the viewpoint of making easy production of the interlayer film, it is preferable that the total number of Tv-decreasing regions and Tv-increasing regions be not too large. The total number is for example, 100 or less, preferably 50 or less, more preferably 20 or less, still more preferably 10 or less, and further preferably 8 or less. Incidentally, these lower and upper limits may be in any combination.

It is preferable that the interlayer film of the present invention have an area ratio of regions having a visible light transmittance of 60% or more measured in the laminated glass of 30% or more. With a certain area or more of the regions having a high Tv, the interlayer film can be suitably used in applications requiring high transparency such as automobile windshields. The area ratio is preferably 40% or more, more preferably 50% or more, still more preferably 60% or more, further preferably 70% or more, furthermore preferably 80% or more, and even furthermore preferably 90% or more. In addition, the higher the area ratio, the better, from the viewpoint of ensuring high transparency over a wide region. The area ratio may be 100% or less, and an area ratio of 100% is also preferred from the viewpoint of increasing the transparency of the entire interlayer film. Also, the area ratio may be a certain value or less, for example, may be 99% or less, or may be 95% or less. The lower limit and the upper limit of the area ratio may be in any combination.

In calculation of the area ratio, Tv's are measured at many measurement points over the entire laminated glass, and the proportion of the measurement points having a Tv of 60% or more in all the measurement points is calculated as the area ratio.

However, in the case where Tv's are substantially the same in a direction perpendicular to the direction from one end to the other end (perpendicular direction), Tv's are measured at equal intervals from one end to the other end of the laminated glass at many points (for example, 20 points or more), and the proportion of measurement points having a Tv of 60% or more in all the measurement points may be calculated as the area ratio. Even with such a measurement method, an accurate area ratio can be calculated in the case where Tv's are substantially the same in the perpendicular direction.

The interlayer film of the present invention may have a minimum visible light transmittance (Tv) measured in a state of laminated glass as described above of 1% or more, 10% or more, or 20% or more. However, from the viewpoint of easily ensuring a certain degree of transparency in the entire region of the interlayer film, the minimum Tv is preferably 50% or more, more preferably 60% or more, and still more preferably 70% or more. The minimum visible light transmittance (Tv) is, for example, 97% or less, and from the viewpoint of enhancing the aesthetic quality of the interlayer film, preferably 90% or less, more preferably 85% or less, still more preferably 83% or less, and further preferably 80% or less. The lower and upper limits of the minimum Tv may be in any combination.

The interlayer film of the present invention may have a maximum value of visible light transmittance (Tv) measured in a state of laminated glass of 100% or less, or may be, for example, 97% or less, or 90% or less. Also, from the viewpoint of providing a colored layer over the entire interlayer film to enhance the aesthetic quality of the entire interlayer film, the maximum value of visible light transmittance (Tv) is preferably less than 87%, more preferably 85% or less, still more preferably 83% or less, and further preferably 80% or less. Also, the maximum value of visible light transmittance (Tv) of the present invention may be, for example, 45% or more, preferably 52% or more, more preferably 62% or more, and still more preferably 72% or more, such that at least a portion of the interlayer film has good transparency. The lower limit and upper limit of the maximum value of Tv may be in any combination.

The maximum and minimum values of visible light transmittance (Tv) here refer to the respective minimum and maximum values of Tv measured from one end to the other end of a laminated glass made of an interlayer film and two sheets of clear glass, as described above.

The interlayer has a largest absolute value (Cm) of the minimum and maximum values of a* and the minimum and maximum values of b* measured in a laminated glass of preferably 1.7 or more, more preferably 5 or more, and still more preferably 10 or more. In the case of chromatic color, the values of a* and b* are farther from 0. Therefore, with an increased absolute value of a* or b*, colorful color usage is achieved, so that the aesthetic quality can be enhanced easily. Cm is not particularly limited and may be 60 or less, 50 or less, or 40 or less. The lower and upper limits of Cm may be in any combination.

The minimum and maximum values of a* and the minimum and maximum values of b* here refer to the minimum and maximum values of a* and the minimum and maximum values of b*, respectively, measured from one end to the other end of a laminated glass made of an interlayer film and two sheets of clear glass as described above.

The interlayer film of the present invention may have one or more resin layers, and preferably has two or more resin layers. The two or more resin layers are resin layers that are laminated in the thickness direction of the interlayer film. At least one resin layer of the one or more resin layers included in the interlayer film is a colored layer having a colorant. In the present invention, due to having a colored layer, an interlayer film with high aesthetic quality can be provided. Further, with the thickness of the colored layer appropriately changed from one end to the other end, an interlayer film that satisfies each of the requirements (A), (A-1), (A-2) and (B) and each of the preferred values of the requirements can be easily obtained.

It is preferable that the interlayer film of the present invention have a plurality of resin layers, of which at least two contain a colorant to make at least two of the resin layers colored layers. In other words, it is preferable that the interlayer film of the present invention have a plurality of resin layers, of which at least two are colored layers. With two or more colored layers provided, an interlayer film with a higher aesthetic quality tends to be easily provided. In the case where two or more resin layers are provided, it is preferable that the thickness of each of the two or more colored layers be appropriately changed from one end to the other end.

The average value of thickness of each resin layer is not particularly limited, preferably 10 µm or more, more preferably 50 µm or more, still more preferably 100 µm or more, further preferably 150 µm or more, and preferably 2000 µm or less, preferably 1500 µm or less, more preferably 1000 µm or less, still more preferably 800 µm or less, and further preferably 500 µm or less. The lower limit and upper limit of the average value of thickness may be in any combination.

The average value of thickness can be calculated by successively measuring the thickness of each resin layer at each coordinate in the TD direction and averaging the measured values.

The resin layer may include a colored layer, a clear layer, or the like, and the thickness of each may be adjusted within the range described above.

In the colored layer of which thickness changes from one end to the other end, the ratio of the minimum thickness to the maximum thickness (minimum thickness/maximum thickness) is preferably 0.94 or less, more preferably 0.90 or less, still more preferably 0.85 or less, and preferably 0.01 or more, more preferably 0.05 or more, still more preferably 0.1 or more. With a minimum thickness/maximum thickness in the range, an interlayer film that satisfies each of the requirements (A), (A-1), (A-2) and (B), and the preferred value of each requirement can be easily obtained. Incidentally, the lower and upper limits of the ratio may be in any combination.

Incidentally, each resin layer may be measured at, for example, 50 points at equal intervals from one end to the other end, and the minimum and maximum values at the 50 measurement points may be regarded as the maximum and minimum values of thickness of each resin layer. The average value of the maximum and minimum values of thickness of each resin layer is regarded to be the average value of thickness of each resin layer.

However, as long as the thickness of one or more, preferably two or more, colored layers is changed, change in the thickness of all of the colored layers from one end to the other end is not required. Accordingly, one or more colored layers included in the interlayer film may have a substantially uniform thickness from one end to the other end.

Incidentally, even in the case where the resin layer is designed to have a uniform thickness, the thickness may not be completely uniform due to manufacturing errors, etc. The thickness of the resin layer is regarded to be substantially uniform in the case where the thickness unintentionally varies within the range of manufacturing errors, etc.

That is, in the present specification, the term "substantially uniform thickness" is intended to include cases where the thickness varies to an extent resulting from manufacturing errors. Specifically, in the case of "substantially uniform thickness", the ratio of the minimum value to the maximum value of thickness (minimum value/maximum value) may be, for example, 0.95 or more and 1.00 or less, preferably 0.97 or more and 1.00 or less, and more preferably 0.98 or more and 1.00 or less.

As described above, the number of resin layers laminated in the thickness direction may be 1 or more, preferably 2 or more, and may be 3 or more. The upper limit of the number of resin layers is not particularly limited, and is preferably 10, more preferably 5, from the viewpoint of easy production.

As described above, the number of colored layers among the resin layers may be 1 or more, preferably 2 or more. The upper limit of the number of colored layers is not particularly limited, and is preferably 8, more preferably 4, from the viewpoint of easy production.

The number of colored layers of which thickness changes from one end to the other end may be 1 or more, preferably 2 or more, and may be 3 or more. The upper limit of the number of colored layers of which thickness changes from one end to the other end is not particularly limited, and is preferably 6, more preferably 4, from the viewpoint of easy production.

The lower limit and the upper limit of each of the number of the resin layers and the number of the colored layers may be in any combination.

Although the thickness of each resin layer may change in one direction from one end to the other end, it is preferable that the thickness be substantially uniform in a direction perpendicular to the one direction (perpendicular direction). With the substantially uniform thickness, the interlayer film has approximately the same L*, a*, b*, and Tv along the perpendicular direction. In the present invention, it is preferable that the one direction from one end to the other end be the TD direction, and the perpendicular direction be the MD (machine direction) perpendicular to the one direction and the thickness direction.

The interlayer film applied to a bent sheet glass (described later) is stretched and curved, and the one direction, etc. are also curved. In that case, the one direction and the perpendicular direction in the curved interlayer film are directions curved in accordance with the curvature.

In the interlayer film of the present invention, at least one of the resin layers has a visible light transmittance (Tv) of preferably less than 87%. The resin layer with a Tv of less than 87% is usually a colored layer. Having a resin layer with a Tv of less than 87%, the interlayer film satisfying each of the requirements (A), (A-1), (A-2) and (B) tends to be obtained easily, through change in thickness of the resin layer with a Tv of less than 87% from one end to the other end as described above.

It is preferable that the interlayer film have two or more resin layers with a Tv of less than 87%. However, an embodiment wherein the interlayer film has a resin layer with a Tv of less than 87% and a resin layer with a Tv of 87% or more is also preferable. The resin layer with a Tv of 87% or more is typically a clear layer containing substantially no colorant. The upper limit of the visible light transmittance (Tv) of the resin layer with a Tv of 87% or more is not particularly limited, and may be 100% or less, 95% or less, or 92% or less.

The Tv of a resin layer with a Tv of less than 87% (typically a colored layer) is preferably 85% or less, more preferably 80% or less, and still more preferably 75% or less, from the viewpoint of enhancement of the aesthetic quality of the interlayer film. Furthermore, the Tv of a resin layer with a Tv of less than 87% (typically a colored layer) is preferably 0.5% or more, more preferably 5% or more, and still more preferably 10% or more, from the viewpoint of imparting a certain degree of transparency to the interlayer film. The lower and upper limits of the Tv of the resin layer may be in any combination.

It is preferable that the interlayer film include at least two resin layers of which at least one of L*, a* and b* is different from each other. Due to having such resin layers, the interlayer film tends to easily satisfy each of the requirements (A), (A-1), (A-2) and (B).

It is also preferable that the interlayer film include at least two resin layers having a different Tv. Having such resin layers, the interlayer film tends to easily satisfy the requirements (A), (A-1), (A-2) and (B), particularly the requirement (B).

In the case where the interlayer film has at least two resin layers of which at least one of L*, a* and b* is different from each other, the sum of the absolute value of the difference in L*, the absolute value of the difference in a*, and the absolute value of the difference in b* between the two resin layers is preferably 0.1 or more, more preferably 0.3 or more, still more preferably 0.5 or more, further more preferably 1 or more, and preferably 200 or less, more preferably 120 or less, still more preferably 80 or less, further preferably 60 or less. With a sum of the above absolute values equal to or more than the lower limit, the interlayer film tends to easily satisfy each of the requirements (A), (A-1), (A-2) and (B). The lower limit and upper limit of the sum of the absolute values may be in any combination.

In the case where an interlayer film has two resin layers with a different L*, the difference in L* is preferably 0.05 or more, more preferably 0.15 or more, still more preferably 0.25 or more, further preferably 0.5 or more, furthermore preferably 1 or more, and preferably 120 or less, more preferably 100 or less, still more preferably 80 or less, and further preferably 60 or less.

In the case where the interlayer film has two resin layers with a different a*, the difference in a* is preferably 0.05 or more, more preferably 0.15 or more, still more preferably 0.25 or more, further preferably 0.5 or more, furthermore preferably 1 or more, and preferably 120 or less, more preferably 100 or less, still more preferably 80 or less, further preferably 60 or less.

In the case where the interlayer film has two resin layers with a different b*, the difference in b* is preferably 0.05 or more, more preferably 0.15 or more, still more preferably 0.25 or more, further preferably 0.5 or more, furthermore preferably 1 or more, and preferably 120 or less, more preferably 100 or less, still more preferably 80 or less, and further preferably 60 or less.

Further, in the case where the interlayer film has two resin layers with a different Tv as described above, the difference in Tv is preferably 1% or more, more preferably 3% or more, still more preferably 5% or more, further preferably 10% or more, and is preferably 86.5% or less, more preferably 83% or less, still more preferably 80% or less.

The respective lower limits and upper limits of the difference in L*, the difference in a*, the difference in b*, and the difference in Tv may be in any combination.

Further, a greater one of the absolute values of a* and b* in each colored layer (CL) is preferably 0.5 or more, more preferably 1 or more, and still more preferably 2 or more. Further, the CL of the colored layer is not particularly limited, and may be 60 or less, for example, 50 or less, or 40 or less. With an increased absolute value of a* or b* in the colored layer, the aesthetic quality of the interlayer film tends to be easily enhanced. The lower limit and upper limit of CL may be in any combination.

The values of visible light transmittance (Tv), L*, a* and b* of each resin layer described above are measured for respective laminated glasses for measurement, which is prepared by scraping off a resin layer to prepare a resin film for evaluation having a thickness of 760 µm by press molding, and bonding two sheets of clear glass having a thickness of 2.5 mm through the resin film. Here, the reference clear glass described above may be used as the clear glass.

The visible light transmittance (Tv) may be determined by measuring the laminated glass for measurement in accordance with JIS R3212 (2015) described above. The values of L*, a* and b* are obtained for one surface of the laminated glass for measurement by measuring the spectral transmittance using a spectrophotometer in accordance with JIS R3212 (2015), and using CIE standard illuminant D65 and 10° visual field color matching function specified in JIS Z 8781-1 (2012), JIS Z 8781-2 (2012), and JIS Z 8781-4 (2013).

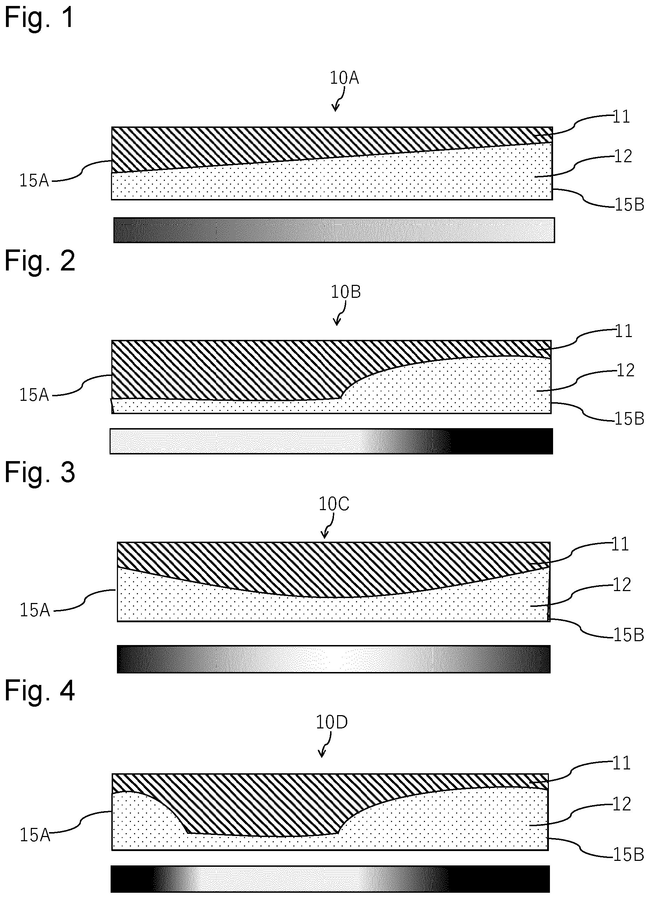

In Fig. 1 to Fig. 7, specific examples of the laminated structure of the interlayer film are shown. In each figure, a structure of the interlayer film is shown on the upper side, and an image diagram showing an example of the values of Tv of the interlayer film is shown on the lower side. In the image diagram on the lower side, darker colors indicate lower values of Tv and lighter colors indicate higher values of Tv. However, the value of Tv is not necessarily required to conform to the image diagram shown on the lower side of each figure, and the value of Tv may change according to a pattern other than the image.

In Figs. 1 to 5, interlayer films 10A to 10E having a two-layer structure are shown, respectively, in which first and second resin layers 11 and 12 are laminated. In the interlayer films shown in Figs. 1 to 5, it is preferable that either the first or second resin layer 11 or 12 contain a colorant and serve as a colored layer. It is preferable that both the first and second resin layers 11 and 12 contain a colorant and serve as colored layers.

However, an embodiment in which one of the layers contains a colorant and serves as a colored layer, and the other layer is a clear layer that contains substantially no colorant, is also preferred. In each of the interlayer films, it is preferable that the first and second resin layers 11 and 12 have a portion of which thickness alone changes.

More specifically, in the interlayer film 10A of Fig. 1, the thickness of a first resin layer 11 decreases from one end 15A to the other end 15B, while the thickness of a second resin layer 12 increases from one end 15A to the other end 15B. It is preferable that the first and second resin layers 11 and 12 in the interlayer film 10A have, for example, different Tv, L*, a* and b* from each other as described above. It is preferable that in the interlayer film 10A, the thicknesses of the first and second resin layers 11 change from one end 15A to the other end 15B, and accordingly, the Tv, L*, a* and b* measured for the laminated glass also change.

The thickness of the first and second resin layers 11 and 12 shown in Fig. 1 changes in the whole range from one end 15A to the other end 15B, (i.e., becomes thinner or thicker), though the change in thickness is not required for the entire range.

In other words, the first and second resin layers 11 and 12 may have change in thickness in a portion of the range from one end 15A to the other end 15B, with substantially uniform thickness in the other portion. For example, as in the interlayer film 10B shown in Fig. 2, the first and second resin layers 11 and 12 may have a portion having a substantially uniform thickness on the side of one end 15A, which may be connected to a portion of which thickness changes on the side of the other end 15B. Alternatively, the portion of which thickness changes may be further connected to a portion having a substantially uniform thickness on the side of the other end 15B.

The interlayer film may have a first resin layer 11 of which thickness increases at first from one end 15A toward the other end 15B of the interlayer film 10C as shown in Fig. 3, and then decreases. In this case, it is preferable that the thickness of the second resin layer 12 decreases at first from one end 15A toward the other end 15B of the interlayer film 10B, and then increases.

In this case, it is preferable that in the interlayer film 10C, the first and second resin layers 11 and 12 have different Tv, L*, a* and b* from each other as described above, and the interlayer film 10C have Tv, L*, a* and b* measured for the laminated glass which change to increase or decrease at first from one end 15A toward the other end 15B, and then change to decrease or increase.

Even in an embodiment having both a portion wherein thickness of the first resin layer 11 and the second resin layer 12 decreases and a portion wherein thickness of the first resin layer 11 and the second resin layer 12 increases from one end 15A toward the other end 15B that is illustrated in Fig. 3, the thickness of the resin layers 11 and 12 is not required to change over the entire region from one end 15A to the other end 15B as in the interlayer film 10D shown in Fig. 4. In other words, the first and second resin layers 11 and 12 may have a portion having a substantially uniform thickness. For example, as shown in Fig. 4, in the first and second resin layers 11 and 12, a portion of which thickness increases from one end 15A toward the other end 15B and a portion of which thickness decreases may be connected through a portion having a substantially uniform thickness.

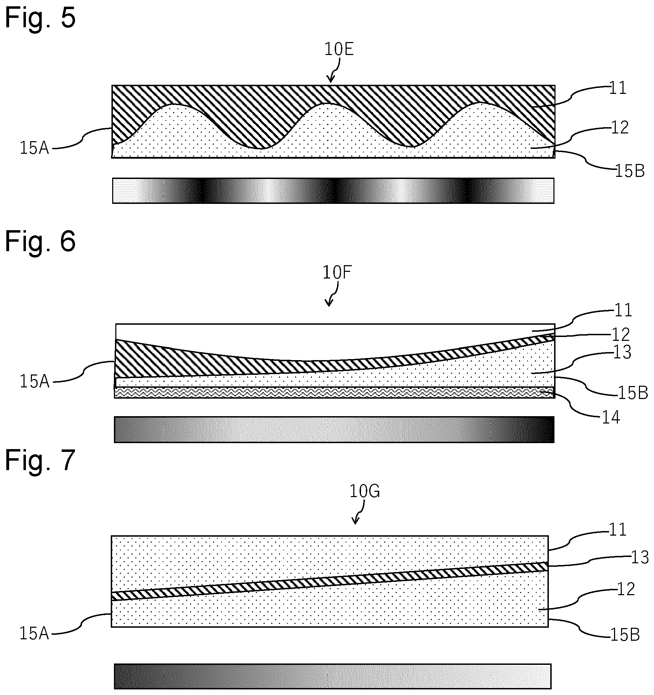

Alternatively, as in the interlayer film 10E shown in Fig. 5, the first and second resin layers 11 and 12 may have portions with thickness increasing and portions with thickness decreasing (or portions with thickness decreasing and portions with thickness increasing) which are repeated from one end 15A toward the other end 15B of the interlayer film 10B. In the interlayer film 10E shown in Fig. 5, the portions with thickness increasing and the portions with thickness decreasing are each repeated three times. The number of repetitions is not particularly limited as long as each is repeated two or more times. However, from the viewpoint of easy production, the number of repetitions is preferably about 10 times or less.

Even in the interlayer film 10E having a structure shown in Fig. 5, it is preferable that the first and second resin layers 11 and 12 have different visible light transmittance (Tv), L*, a* and b* from each other as described above. As a result, the interlayer film 10E has a portion with Tv, L*, a* and b* increasing and a portion with Tv, L*, a* and b* decreasing (or a portion with Tv, L*, a* and b* decreasing and a portion with Tv, L*, a* and b* increasing) which are repeated from one end 15A toward the other end 15B in the laminated glass.

As shown in Fig. 5, even in the case where a portion with thickness increasing and a portion with thickness decreasing (or a portion with thickness decreasing and a portion with thickness increasing) are repeated in each of the resin layers, a portion with a substantially uniform thickness may be included as shown in Figs. 2 and 4.

The interlayer film may have three or more resin layers, and, for example, as in an interlayer film 10F in Fig. 6, may have first to fourth resin layers 11 to 14, some of which (for example, first to third resin layers 11 to 13) may have a portion with thickness each changing.

Specifically, in an interlayer film 10F, the thickness of a first resin layer 11 increases at first and then decreases from one end 15A toward the other end 15B of the interlayer film 10F. The thickness of a second resin layer 12 decreases from one end 15A toward the other end 15B, and the thickness of a third resin layer 13 increases from one end 15A toward the other end 15B. The thickness of a fourth resin layer 14 is substantially uniform from one end 15A toward the other end 15B.

Incidentally, any one, two, or three of the first resin layers 11 to 13 may be a colored layer. The first resin layers 11 to 13 that are not colored layers may be clear layers. Similarly, the fourth resin layer 14 may be a colored layer or a clear layer.

In the interlayer film 10F, the first to third resin layers 11 to 13 may have, for example, different Tv, L*, a* and b* from each other as described above. In this way, the first to third resin layers 11 to 13 have different Tv, L*, a* and b* from each other, so that the interlayer film 10F has Tv, L*, a* and b* each that change from one end 15A toward the other end 15B in the laminated glass described above.

In the structure shown in Figs. 1 to 5 (two-layer structure), the first and second resin layers 11, 12 have been described on the assumption that all of Tv, L*, a* and b* are different from each other. However, it is sufficient that at least one of Tv, L*, a* and b* is different from each other. As a result, the interlayer film in the laminated glass may have any one of Tv, L*, a* and b* different from each other that change from one end 15A toward the other end 15B.

Similarly, also in the structure shown in Fig. 6 (three or more-layer structure), the first to third resin layers 11 to 13 have been described on the assumption that all of Tv, L*, a* and b* are different from each other. However, it is sufficient that at least one of Tv, L*, a* and b* is different from each other. As a result, the interlayer film in the laminated glass may have any one of Tv, L*, a* and b* different from each other that changes from one end 15A toward the other end 15B.

Alternatively, the interlayer film may be an interlayer film having a three-layer structure including first to third resin layers 11, 12 and 13, as shown in Fig. 7. The interlayer film having a three-layer structure may be an interlayer film 10G having a structure (refer to Fig. 7) in which the third resin layer 13 having a substantially uniform thickness is provided between the first and second resin layers 11 and 12 having a thickness that changes from one end toward the other end as shown in Figs. 1 to 5. In this case, the third resin layer 12 may be a colored layer containing a colorant, or may be a clear layer containing substantially no colorant. On the other hand, the first and second resin layers 11 and 12 are as described above.

In Fig. 7, the structure of the first and second resin layers 11 and 12 is the same as the structure of the first and second resin layers 11 and 12 shown in Fig. 1. However, the structure of the first and second resin layers 11 and 12 is not limited to the structure shown in Fig. 1 and may be any of the structures shown in Figs. 2 to 5, or may have a structure other than those shown in Figs. 2 to 5.

Incidentally, in the case of a three-layer structure, though not shown, all of the first to third resin layers 11 to 13 may be resin layers with a thickness that changes from one end toward the other end, and for example, in the structure shown in Fig. 6, the fourth resin layer 14 may be omitted.

Further, the interlayer film may have a laminated structure having five or more layers, and may have, for example, a structure in which two or more laminated structures shown in Figs. 1 to 7 are laminated on each of both sides of a functional film described below. Note that the laminated structures of the resin layer described above are merely examples, and the interlayer film is not limited to the laminated structures described above.

In the laminated structures described above, each resin layer is provided over the region from one end to the other end, and the number of the interlayer films is the same from one end to the other end. In other words, each colored layer may be provided over the entire region of the interlayer film. Also, each resin layer may be provided over the entire region of the interlayer film. However, some of the resin layers may be provided in a partial region of the interlayer film. Accordingly, all of the resin layers are not required to be provided over the region from one end to the other end, and the number of layers of the interlayer film may change in the middle between one end and the other end.

### [Material of interlayer film]

It is preferable that the resin that constitutes each of the resin layers be a thermoplastic resin. With use of a thermoplastic resin for each of the resin layers of the interlayer film, the laminated glass members can be easily bonded by thermocompression bonding through the interlayer film. Further, multiple resin layers can be easily produced by extrusion forming or the like.

### (Thermoplastic resin)

Examples of the thermoplastic resin for use in the interlayer film include (meth)acrylic resins, polyvinyl acetal resins, polyvinyl alcohol-based resins (PVA), polyurethane-based resins (PU), ethylene-vinyl acetate copolymer resins (EVA), saponified ethylene-vinyl acetate copolymers (EVOH), ethylene-methacrylate copolymer resins, ionomer resins, isobutylene resins, styrene-isoprene copolymer resins, styrene-butadiene copolymer resins, polyester resins, and polyolefin resins. In each of the resin layers, the thermoplastic resin may be used alone or in combination of two or more types. In the case where a plurality of resin layers are provided, the thermoplastic resin used in each of the resin layers may be the same or different from each other.

As the thermoplastic resins, among the above, at least one of polyvinyl acetal resins and ethylene-vinyl acetate copolymer resins are preferably used, and polyvinyl acetal resins are more preferred. With use of polyvinyl acetal resins, the impact resistance of the laminated glass tends to be enhanced, and the adhesive strength to the laminated glass member tends to be enhanced.

The polyvinyl acetal resin is not particularly limited as long as it is a polyvinyl acetal resin obtained by acetalizing polyvinyl alcohol (PVA) with an aldehyde.

The aldehyde is not particularly limited, and generally, an aldehyde having 1 to 10 carbon atoms is suitably used. The aldehyde having 1 to 10 carbon atoms is not particularly limited, and examples thereof include n-butyl aldehyde, isobutyl aldehyde, n-valeraldehyde, 2-ethylbutyl aldehyde, n-hexyl aldehyde, n-octyl aldehyde, n-nonyl aldehyde, n-decyl aldehyde, formaldehyde, acetaldehyde and benzaldehyde. These aldehydes may be used alone, or may be used in combination of two or more types.

Among the above, n-butyl aldehyde, n-hexyl aldehyde, and n-valeraldehyde are preferred, and n-butyl aldehyde is more preferred. Accordingly, as the polyvinyl acetal resin, a polyvinyl butyral resin is preferred.

The polyvinyl acetal resin generally has an acetal group, a hydroxyl group, and an acetyl group in the side chain. The polyvinyl acetal resin may be an unmodified polyvinyl acetal resin, or may be a modified polyvinyl acetal resin.

The modified polyvinyl acetal resin has a structure (modified group) other than an acetal group, a hydroxyl group, and an acetyl group, and preferably has a modified group in a side chain. Examples of the modified group include those having a polyalkylene oxide structure in a side chain, and those having an alkyl group (e.g., having about 2 to 30 carbon atoms) other than an acetal group and an acetyl group in a side chain.

In the interlayer film, the polyvinyl acetal resin may be used alone or in combination of two or more types.

In the case where a plurality of resin layers are provided, the thermoplastic resins used for the respective resin layers may be the same or different.

In the interlayer film, the resin that constitutes at least one resin layer is preferably at least one of a polyvinyl acetal resin and an ethylene-vinyl acetate copolymer resin, and more preferably a polyvinyl acetal resin.

The use of these resins allows the thickness to be easily changed by extrusion forming, so that a colored layer of which thickness changes can be suitably produced. Further, the use of these resins allows the layer to be bonded to the laminated glass member with high adhesive strength.

Accordingly, the resin for use in the colored layer of which thickness changes from one end toward the other end or in the resin layer that constitutes the surface layer is preferably at least one of a polyvinyl acetal resin and an ethylene-vinyl acetate copolymer resin, and more preferably a polyvinyl acetal resin. The surface layer is a resin layer to make an adhesive surface with the laminated glass member in the laminated glass.

In the case where a plurality of resin layers are provided, the resin that constitutes all the resin layers may be at least one of a polyvinyl acetal resin and an ethylene-vinyl acetate copolymer resin. In that case, it is more preferable that the resin that constitutes all the resin layers be a polyvinyl acetal resin.

In addition, in the case of having a plurality of resin layers, the resin that constitutes some of the resin layers may be either a polyvinyl acetal resin or an ethylene-vinyl acetate copolymer resin, and the remaining resin layers may be resin layers other than the resin layers containing at least one of the polyvinyl acetal resin and the ethylene-vinyl acetate copolymer resin (other resin layers). In other words, the other resin layers may be resin layers containing a resin other than the polyvinyl acetal resin and the ethylene-vinyl acetate copolymer resin.

By inclusion of other resin layers in the interlayer film, various functions can be imparted to the interlayer film, and for example, any of the functional films described below can be suitably included in the interlayer film. As the resin that constitutes the other resin layers, polyester resins such as polyethylene terephthalate are preferred.

Among the one or more resin layers in the interlayer film, at least one resin layer is preferably a resin layer having a glass transition temperature of 15°C or more (hereinafter sometimes referred to as "high-Tg resin layer"). By inclusion of a high-Tg resin layer in the interlayer film, the interlayer film tends to have enhanced penetration resistance, handleability, mechanical properties, etc., and can be suitably used as an interlayer film for laminated glass.

The glass transition temperature of the high-Tg resin layer is preferably 20°C or more, more preferably 25°C or more, and still more preferably 30°C or more, and is, for example, 80°C or less, preferably 60°C or less, and more preferably 50°C or less. The lower and upper limits of the glass transition temperature may be in any combination.

In the case where the interlayer film is a single layer, the glass transition temperature may be determined by measuring the viscoelasticity of the interlayer film as a measurement sample using a viscoelasticity measurement apparatus. In the case where the interlayer film is a multi-layer film, the glass transition temperature may be determined by peeling each of the layers from the interlayer film, preparing a measurement sample from each of the resulting layers, and measuring the viscoelasticity using a viscoelasticity measurement apparatus.

Specifically, it can be measured, for example, by the following measurement method.

The measurement sample is stored for 12 hours in an environment at room temperature of 23°C±2°C and a humidity of 25±5%. Then, the viscoelasticity is measured using a viscoelasticity measurement apparatus (for example, a viscoelasticity measurement apparatus "ARES-G2" manufactured by TA Instruments). Using a parallel plate with a diameter of 8 mm as a jig, the measurement is performed in a shear mode, under conditions with temperature decreasing from 100°C to -20°C at a temperature decreasing rate of 3°C/min, at a frequency of 1 Hz and a strain of 1%. In the resulting measurement results, the peak temperature of the loss tangent is regarded as glass transition temperature Tg (°C).

Among one or more resin layers of the interlayer film, at least one resin layer may have a glass transition temperature of less than 15°C (hereinafter referred to as low-Tg resin layer). Due to having a low-Tg resin layer, the interlayer film tends to enhance the sound insulation properties. From the viewpoint of enhancing the sound insulation properties, the glass transition temperature of the low-Tg resin layer is preferably 10°C or less, more preferably 5°C or less, and still more preferably 0°C or less. The glass transition temperature of the low-Tg resin layer is not particularly limited, and is preferably -20°C or more from the viewpoint of enhancing the mechanical properties such as bending rigidity of the interlayer film. The lower limit and the upper limit of the glass transition temperature may be in any combination.

The glass transition temperature of the resin layer may be adjusted by appropriately adjusting the type of resin for use in the resin layer, and the composition of the resin, etc. For example, the glass transition temperature may be raised by increasing the amount of hydroxyl groups in a polyvinyl acetal resin.

Although the low-Tg resin layer may be a colored layer, a clear layer that is highly transparent, containing substantially no colorant, is preferred.

In the case where the interlayer film has a low-Tg resin layer, it is preferable that the interlayer film contain a high-Tg resin layer in addition to the low-Tg resin layer. Due to having both a high-Tg resin layer and a low-Tg resin layer, the interlayer film can enhance sound insulation properties while maintaining good mechanical strength, penetration resistance, adhesion to a laminated glass member, etc.

That is, in the case where the interlayer film has a multilayer structure, it is preferable that all of the resin layers be high-Tg resin layers, and an embodiment wherein at least one of the resin layers is a high-Tg resin layer and at least one of the resin layers is a low-Tg resin layer is also preferable.

For example, as shown in Figs. 1 to 5, in the case of a two-layer structure, both of the two resin layers may be high-Tg resin layers, or one resin layer may be a high-Tg resin layer and another resin layer may be a low-Tg resin layer. However, in the case of a two-layer structure, it is preferable that both resin layers be high-Tg resin layers. In the case of a two-layer structure, since both resin layers are surface layers that are bonded to a laminated glass member, both of the resin layers made of high-Tg resin allow to achieve good adhesion to the laminated glass member. In addition, the mechanical strength and penetration resistance of the interlayer film can be maintained in a good state.

Furthermore, as shown in Fig. 7, in the case of a three-layer structure, all of the three resin layers may be high-Tg resin layers, or one or two resin layers may be high-Tg resin layers and two or one resin layer may be low-Tg resin layers.

In the case where the interlayer film has three or more resin layers and has a low-Tg resin layer, it is preferable that a pair of high-Tg resin layers and a low-Tg resin layer disposed between the pair of high-Tg resin layers be provided. In this case, it is more preferable that the high-Tg resin layer be disposed on the surface to serve as an adhesive surface for the laminated glass. Due to having such a structure, the interlayer film can maintain good mechanical strength, penetration resistance, adhesiveness to the laminated glass member, etc., while enhancing sound insulation properties.

Accordingly, in the three-layer structure shown in Fig. 7, etc., the first and second resin layers 11 and 12 as surface layers may be high-Tg resin layers, and the third resin layer 13 disposed between the surface layers may be a low-Tg resin layer. In this case, it is preferable that the third resin layer be a clear layer. On the other hand, it is preferable that at least one of the first and second resin layers 11 and 12 be a colored layer, and it is more preferable that both be colored layers. As described above, the same applies to the case where a third resin layer is further provided between the first and second resin layers in the laminated structures shown in Figs. 2 to 5.

In addition, for example, in the four-layer structure shown in Fig. 6, the first and fourth resin layers 11 and 14 as surface layers may be high-Tg resin layers, and either or both of the second and third resin layers 12 and 13 disposed between the surface layers may be low-Tg resin layers.

The resin layer as low-Tg resin layer may have a substantially uniform layer thickness ratio of the low-Tg resin layer thickness to the total layer thickness. Also, in the case where two or more resin layers are low-Tg resin layers, the layer thickness ratio of the total thickness of the low-Tg resin layers to the total layer thickness may be substantially uniform. Therefore, in the case where the interlayer film has a substantially uniform thickness, the low-Tg resin layer (total thickness in the case of multiple layers) may also have a substantially uniform thickness as described above. On the other hand, in the case where the thickness of the interlayer film is ununiform and, for example, the thickness changes from one end toward the other end, the thickness of the low-Tg resin layer may also be changed according to the change in thickness.

### (Plasticizer)

Each of the resin layers may further contain a plasticizer in the case where the resin used is a thermoplastic resin. Due to containing a plasticizer in the resin layer, the interlayer film is flexible, and as a result, the laminated glass is also flexible. Further, in the case where the laminated glass member is inorganic glass, the adhesion to the laminated glass member may be enhanced. In the case where a polyvinyl acetal resin is used as thermoplastic resin, it is particularly effective to contain a plasticizer in the resin layer containing the thermoplastic resin.

Examples of the plasticizer include organic ester plasticizers such as monobasic organic acid esters and polybasic organic acid esters, and phosphorus-based plasticizers such as phosphate-based plasticizers and phosphite-based plasticizers. Among these, organic ester plasticizers are preferred, and triethylene glycol-di-2-ethylhexanoate (3GO) is particularly preferred.

The content of the plasticizer is not particularly limited, and is, for example, 10 parts by mass or more and 100 parts by mass or less, preferably 20 parts by mass or more and 85 parts by mass or less, relative to 100 parts by mass of the thermoplastic resin in each of the resin layers.

The content of the plasticizer in the high-Tg resin layer may be relatively low from the viewpoint of handleability and mechanical strength of the interlayer film, and is, for example, 10 parts by mass or more and 50 parts by mass or less, preferably 20 parts by mass or more and 45 parts by mass or less, and more preferably 25 parts by mass or more and 40 parts by mass or less, relative to 100 parts by mass of the thermoplastic resin.

The content of the plasticizer in the low-Tg resin layer relative to 100 parts by mass of the thermoplastic resin may be larger than the content in the high-Tg resin layer relative to 100 parts by mass of the thermoplastic resin, from the viewpoint of enhancing the flexibility of the laminated glass and facilitating enhancement in the penetration resistance and sound insulation properties. Specifically, the content may be 25 parts by mass or more and 100 parts by mass or less, more preferably 45 parts by mass or more and 95 parts by mass or less, and still more preferably 50 parts by mass or more and 90 parts by mass or less.

It is preferable that the main components of each of the resin layer be a thermoplastic resin, or a thermoplastic resin and a plasticizer. Specifically, the total amount of the thermoplastic resin and the plasticizer is preferably 50 mass% or more, more preferably 60 mass% or more, and still more preferably 65 mass% or more and 100 mass% or less, based on the total amount of the respective resin layers.

### (Colorant)

In the case where the resin layer is a colored layer, the resin layer may contain a colorant which is uniformly dispersed therein. With the colorant uniformly dispersed, each of the requirements (A), (A-1), (A-2) and (B) is easily satisfied through change in the thickness as described above. The colored layer may be the high-Tg resin layer or the low-Tg resin layer described above, and is preferably a high-Tg resin layer.

The colorant for use is not particularly limited, and may be any coloring matter that has traditionally been blended into an interlayer film, such as blue, yellow, red, green, purple, white, and black coloring matters. As the coloring matters, pigments, dyes, etc. may be used. The interlayer film can be colored to a desired color with a colorant. Further, by inclusion of a colorant, the a*, b*, L*, and Tv of the resin layer may be adjusted. Specifically, the absolute values of a* and b* may be increased by inclusion of a colorant. Furthermore, the L* and Tv of the resin layer may be decreased by inclusion of a colorant.

Examples of pigments for use in the interlayer film include carbon black, copper phthalocyanine pigments such as pigment blue, phthalocyanine pigments such as cobalt phthalocyanine pigments, anthraquinone-based pigments, perylene pigments, diketopyrrolopyrrole pigments, quinacridone pigments, perinone-based pigments, thioindigo pigments, isoindoline pigments, isoindolinone pigments, quinophthalone-based pigments, threne-based pigments, dioxazine pigments, pyrrocholine-based pigments, fluorubine-based pigments, azo-based pigments, titanium oxide-based pigments, calcium carbonate-based pigments, metal oxide-based pigments, Ni complex-based pigments, and other metal complex-based pigments.

Examples of the dye include azo dyes, cyanine dyes, triphenylmethane dyes, phthalocyanine dyes, anthraquinone dyes, naphthoquinone dyes, quinoneimine dyes, methine dyes, azomethine dyes, squarylium dyes, acridine dyes, styryl dyes, coumarin dyes, quinoline dyes, and nitro dyes. The dye may be a disperse dye.

The pigments and dyes that constitute the colorants described above may be blended directly into the resin, or may be made into the form of ink, toner, or the like and then blended into the resin.

In addition to the pigments and dyes described above, heat-shielding agents for use in an interlayer film may also be used as colorants. Heat-shielding agents block a certain amount of visible light, so that the interlayer film can satisfy the above requirements (A), (A-1), (A-2) and (B) by inclusion of a heat-shielding agent.

The heat shielding agent is typically a material capable of absorbing infrared rays having a wavelength of 780 nm or more, i.e., heat rays. The heat shielding agent is made of inorganic material, and typically heat shielding particles are used. Specific examples thereof include metal oxide particles, particles other than metal oxide particles such as lanthanum hexaboride (LaB6) particles. Examples of metal oxide particles include tin oxide particles such as aluminum-doped tin oxide particles, indium-doped tin oxide particles, and antimonydoped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Alternatively, heat shielding particles other than these may be used. The heat shielding agent may be used alone or in combination of two or more types.

Among these, metal oxide particles are preferred due to having high heat ray shielding function, and use of at least one selected from ATO particles, GZO particles, ITO particles, and CWO particles is more preferred, and use of ITO particles or CWO particles is still more preferred.

The preferred lower limit of the average particle size of the heat shielding particles is 10 nm and the more preferred lower limit is 20 nm, while the preferred upper limit is 100 nm, more preferred upper limit is 80 nm, and still more preferred upper limit is 50 nm. With an average particle size equal to or more than the preferred lower limit, the heat ray shielding properties can be sufficiently enhanced. With an average particle size equal to or less than the preferred upper limit, the heat shielding agent is less likely to shield visible light more than necessary. The term "average particle size" refers to volume average particle size. The average particle size may be measured using a particle size distribution measurement apparatus ("UPA-EX150" manufactured by Nikkiso Co., Ltd.) or the like. The lower and upper limits of the average particle size may be in any combination.

As the colorant among the above, pigments or dyes are preferably used, and pigments are more preferably used. By using either of the pigments or dyes as colorant, the values of a*, b*, L*, and Tv can be changed with a small amount of use.

The colorant content in an entire interlayer film is, for example, 0.00001 mass% or more and 7 mass% or less, based on the whole amount of the interlayer film. With a colorant content of 0.00001 mass% or more, the interlayer film can be colored and the requirements (A), (A-1), (A-2) and (B) can be satisfied. With a content of 7 mass% or less, the interlayer film can be prevented from being colored more than necessary, and deterioration of various functional performances of the interlayer film caused by the colorant can be prevented.

The content of the colorant in the entire interlayer film is preferably 0.00005 mass% or more, more preferably 0.0001 mass% or more, still more preferably 0.0005 mass% or more, further preferably 0.001 mass% or more, and preferably 5 mass% or less, more preferably 3 mass% or less, still more preferably 1 mass% or less.

In the case where at least one of pigments and dyes is used as colorant, the content of the colorant selected from the pigment and the dye in the entire interlayer film has the lower limit described above, while the upper limit may be less than the above, for example, 0.5 mass% or less, preferably 0.3 mass% or less, and more preferably 0.1 mass% or less. In the case where at least a heat-shielding agent is used as colorant, the content of the colorant made of heat-shielding agent has the upper limit described above, while the lower limit may be more than the above, for example, 0.1 mass% or more, preferably 0.2 mass% or more, and more preferably 0.3 mass% or more. The lower limit and upper limit of the colorant content in the entire interlayer film may be in any combination.

The colorant content in each of the colored layer is, for example, 0.00002 mass% or more and 10 mass% or less based on the total amount of each of the colored layers. With a content of 0.00002 mass% or more, the above requirements (A), (A-1), (A-2) and (B) can be also satisfied by changing the thickness of the resin layer. With a content of 5 mass% or less, the resin layer is prevented from being colored more than necessary and various functions and performance of each of the resin layers are prevented from being deteriorated by the colorant.

The colorant content in each of the colored layers is preferably 0.0001 mass% or more, more preferably 0.0002 mass% or more, still more preferably 0.002 mass% or more, and is preferably 8 mass% or less, more preferably 5 mass% or less, still more preferably 3 mass% by mass or less, further preferably 1 mass% or less.

In the case where at least one of pigments and dyes is used as colorant, the content of colorant selected from the pigment and the dye in each of the colored layers has the lower limit as described above, and the upper limit which may be less than the above, for example, 0.6 mass% or less, preferably 0.4 mass% or less, and more preferably 0.2 mass% or less. In the case where at least a heat-shielding agent is used as colorant, the content of the colorant made of heat-shielding agent has the upper limit described above, and the lower limit may be more than the above, for example, 0.1 mass% or more, preferably 0.2 mass% or more, more preferably 0.4 mass% or more. The lower limit and upper limit of the colorant content in each of the colored layers may be in any combination.

In the case where two or more colored layers are provided in the interlayer film, the colorant content in each of the resin layers may be the same or different from each other.

The clear layer contains substantially no colorant and is a highly transparent layer. The expression "containing substantially no colorant" means that a colorant that is inevitably mixed in from other components such as colored layers may be contained without impairing transparency. The visible light transmittance (Tv) of the clear layer is preferably 87% or more as described above. The method for measuring the visible light transmittance (Tv) of the clear layer is the same as the method for measuring the visible light transmittance (Tv) of each of the resin layers described above.

Each of the resin layers that constitutes the interlayer film may appropriately contain known additives for use in an interlayer film, in addition to the plasticizer and colorant. Specific examples of additives other than plasticizers include ultraviolet absorbers, antioxidants, light stabilizers, adhesive strength regulators, fluorescent whitening agents, and crystal nucleating agents.

The thickness of the interlayer film is not particularly limited, and is, for example, 0.1 mm or more, preferably 0.2 mm or more, more preferably 0.3 mm or more, and is, for example, 4 mm or less, preferably 3 mm or less, more preferably 2 mm or less, still more preferably 1.7 mm or less, further preferably 1.5 mm or less, and furthermore preferably 1 mm or less. With a thickness of the interlayer film equal to or more than the lower limit, the impact resistance can be enhanced and adhesion to a laminated glass member or the like tends to be easily ensured. On the other hand, with a thickness equal to or less than the upper limit, the thickness of the laminated glass is prevented from being unnecessarily thickened. The thickness of the interlayer film is the average value of the total thickness of the interlayer films, and may be calculated by adding up the average values of the thickness of the respective layers that constitute the interlayer film. The lower limit and upper limit of the thickness of the interlayer film may be in any combination.

The thickness of the interlayer film may be substantially uniform or ununiform. For example, the thickness may change from one end toward the other end, or there may be a difference in thickness between one end and the other end. In the case there exists a difference in thickness between one end and the other end, the thickness ratio therebetween is, for example, 0.5 or more and less than 0.95, preferably 0.6 or more and 0.9 or less. The thickness ratio is a ratio between the thicknesses at one end and the other end obtained by dividing the smaller thickness by the larger thickness. With the thickness of the interlayer film changing from one end toward the other end, the requirements (A), (A-1), (A-2), and (B) tend to be satisfied easily even in the case where the resin layer is not multi-layered.

Although it is assumed that the colorant is uniformly dispersed in each of the layers and the concentration of the colorant is approximately the same throughout each of the colored layer in the explanation described above, the concentration in the colored layer may be ununiform. With an ununiform concentration in the colored layer, the colorant concentration inside the colored layer changes from one end to the other without change in the thickness of the colored layer, so that the requirements (A), (A-1), (A-2), and (B) tend to be satisfied easily.

### (Functional film)

The interlayer film may have a functional film. The functional film may be made of a resin layer, may be made of a material other than a resin layer, or may be made of a laminate of a resin layer and a layer other than a resin layer. Specific examples of the functional film include a coated film, a color film, a heat reflection film, and a barrier film.

The resin layer in the functional film may be the colored layer described above or a clear layer. The colored layer in the functional film may be a colored layer having a substantially uniform thickness or a colored layer having a variable thickness. The colored layer may be provided in a partial region of the functional film so as to be provided in a partial region of the interlayer film. In the functional film, the colored layer may be provided together with a substrate film, as in the coating film and color film to be described below.

Examples of the coated film include a resin film (substrate film) having a coating film formed on at least one surface thereof using a paint containing a colorant such as a pigment or dye. Examples of the resin used in the resin film include the thermoplastic resins described above, though resins other than thermoplastic resins may be used. As the resin used for the resin film is preferably a polyester resin such as polyethylene terephthalate. The pigments and dyes may be appropriately selected from those listed above. The coating film contains a binder resin component and a colorant, and may also be the colored layer described above

The color film is a film including a colorant dispersed in a resin. Examples of the resin for use in the resin film include the thermoplastic resin described above, though resins other than thermoplastic resins may also be used. As the resin for use in the resin film, a polyester resin such as polyethylene terephthalate is preferred. In addition, pigments and dyes may be appropriately selected for use from those listed above. The color film can also be the colored layer described above. Alternatively, the color film may have a structure in which a colored layer is laminated on a substrate film.

Examples of heat reflective films include resin films with a metal foil, multi-layer laminated films having a metal layer and a dielectric layer formed on a resin film, multi-layer resin films, and liquid crystal films. These films have the ability to reflect infrared rays.

The resin film with a metal foil includes a resin film and a metal foil laminated on one side of the resin film. The resin film may be made of any of the thermoplastic resins listed above, or may be made of any resin other than the thermoplastic resins listed above. Examples of the metal foil material include aluminum, copper, silver, gold, palladium, and an alloy containing any of these.

The multilayer laminate film including a metal layer and a dielectric layer formed on a resin film is a multilayer laminate film including metal layers and dielectric layers alternately laminated on a resin film in any number of layers. In the multilayer laminate film including a metal layer and a dielectric layer formed on the resin layer, it is preferable that all of the metal layers and dielectric layers be alternately laminated, though there may be a structural portion in which some of the metal layers and dielectric layers are not alternately laminated.

As the material for the resin film in the multi-layer laminate film, the resins listed above as thermoplastic resins may be used, or a resins other than the resins listed above as thermoplastic resins may be used.

Examples of the material of the metal layer in the multi-layer laminate film include the same material as the material of the metal foil in the resin film with metal foil. A coating layer of metal or mixed metal oxides may be applied to both sides or one side of the metal layer. Examples of the material of the coating layer include ZnO, Al₂O₃, Ga₂O₃, InO₃, MgO, Ti, NiCr and Cu. Examples of the material of the dielectric layer in the multi-layer laminate film include indium oxide.

The multilayer resin film is a laminate film in which a plurality of resin films are laminated. Examples of the material of the multilayer resin film include the same materials as the materials of the resin films in the multilayer laminate film. The number of resin films laminated in the multilayer resin film is 2 or more, may be 3 or more, or may be 5 or more. The number of resin films laminated in the multilayer resin film may be 1000 or less, may be 100 or less, or may be 50 or less. The lower limit and upper limit of the number of layers may be in any combination.

The multilayer resin film may be a multilayer resin film in which two or more types of thermoplastic resin layers having different optical properties (refractive index) are laminated alternately or randomly in any number of layers. Such a multilayer resin film is configured to obtain a desired infrared reflection performance.

Examples of the liquid crystal film include a film including cholesteric liquid crystal layers that reflect light of any wavelength are laminated in any number of layers. Such a liquid crystal film is configured to provide a desired infrared reflection performance.

The barrier film is a layer provided between two resin layers to prevent an additive (e.g., colorant) contained in one resin layer from migrating to another resin layer. The barrier film is preferably made of a resin layer, and examples of the resin for use in the barrier film include a polyester resin and an acrylic resin.

As the acrylic resin, an acrylic polymer containing a structural unit derived from a hydroxyl group-containing (meth)acrylate is preferred, and specifically, polyhydroxy propyl methacrylate (HPMA resin), polyhydroxy ethyl methacrylate (HEMA resin), etc. are preferred.

As the polyester resin, polyethylene terephthalate, polyhydroxy propyl methacrylate, and polyhydroxy ethyl methacrylate are preferred, and in particular, polyethylene terephthalate (PET) is preferred. The polyethylene terephthalate may be a modified PET, and for example, cyclohexanedimethylene modified PET (PETG) or the like is preferred.

The resin for use in the barrier layer may include one type alone or two or more types in combination.

In the case where the interlayer film has a functional film, a resin layer other than the functional film is preferably included in addition to the functional film. The resin layer included may be laminated on one or both sides of the functional film, and it is preferable that a resin layer be laminated on both sides of the functional film. One resin layer or two or more resin layers may be laminated on one or both sides of the functional film, respectively.

As described above, the functional film may contain a colored layer. Since it is generally difficult to change the thickness of the colored layer in the functional film, the interlayer film may include a colored layer of which thickness changes from one end toward the other end, in addition to the functional film. Accordingly, the resin layer laminated on one side or both sides of the functional film may include a colored layer of which thickness changes from one end toward the other end.

Specifically, in each of the laminate structures shown in Figs. 1 to 5, a functional film may be further disposed between the first resin layer 11 and the second resin layer 12.

### (Production method of interlayer film)

The production method of an interlayer film is not particularly limited, and it is preferable that the interlayer film be formed by extrusion forming. Specifically, each resin layer may be formed by extruding a resin that constitutes each resin layer, or a resin composition that contains additives such as a plasticizer and a colorant in addition to the resin. In the case where the interlayer film has multiple resin layers, it is preferable that forming be performed by co-extrusion.

In the co-extrusion, a co-extruder having a plurality of extruders and a multi-layer feed block may be used. In the co-extruder, the tip of each extruder may be connected to the multi-layer feed block through a molten resin transport pipe or the like.

In the co-extruder, the resin or resin composition for forming each resin layer may be fed from each extruder to a multi-layer feed block through a molten resin transport pipe or the like, and merged in the multi-layer feed block to be co-extruded as a multi-layer interlayer film. On this occasion, the thickness of each resin layer may be adjusted by setting the gap width at each coordinate in the width direction (TD) of the flow path (e.g., slit) of each resin layer provided in the multi-layer feed block and/or mold in accordance with the target thickness profile.

In coextrusion, the thickness of the interlayer film may be adjusted and changed on an as needed basis by setting the gap width at each coordinate in the width direction (TD) of the die outlet in extrusion forming to match the target thickness profile. Also, as described below, in the case where a resin layer is extruded onto another resin layer or a functional film, or a resin layer is prepared in advance to be laminated on another resin layer or a functional film by lamination or the like, the gap width at each coordinate in the width direction (TD) of the die outlet may be adjusted in the same manner to change the thickness from one end to the other end of the resin layer in preparation of the resin layer.

Also, in the case where the interlayer film has multiple resin layers, the method is not limited to coextrusion. The interlayer film may be produced by extruding another resin layer onto a previously prepared resin layer, or by laminating previously prepared resin layers to each other.

In the case where the interlayer film includes a functional film, the interlayer film may be produced by extruding a resin or a resin composition for forming each resin layer on one or both sides of the functional film. Also, in the case where multiple resin layers are laminated on one or both sides of the functional film, co-extrusion may be used. Alternatively, the interlayer film may be obtained by laminating a functional film and a resin layer prepared in advance.

### [Laminated glass]

The present invention further provides a laminated glass. The laminated glass is provided with first and second laminated glass members and an interlayer film disposed between the first and second laminated glass members. The first and second laminated glass members may be bonded to each other through the interlayer film.

### (First and second laminated glass members)

Examples of the first and second laminated glass members for use in the laminated glass include sheet glass. The sheet glass may be made of either inorganic glass or organic glass, and inorganic glass is preferred. The inorganic glass is not particularly limited, and examples thereof include clear glass, float sheet glass, tempered glass, colored glass, polished sheet glass, figured sheet glass, mesh sheet glass, lined sheet glass, ultraviolet absorbing sheet glass, infrared reflecting sheet glass, infrared absorbing sheet glass, and green glass.

As the organic glass, what is generally called resin glass is used, and examples thereof include various organic sheet glass such as polycarbonate sheet, (meth)acrylic sheet such as polymethyl methacrylate sheet, acrylonitrile-styrene copolymer sheet, acrylonitrile-butadienestyrene copolymer sheet, polyester sheet such as polyethylene terephthalate sheet, fluorinebased resin sheet, polyvinyl chloride sheet, chlorinated polyvinyl chloride sheet, polypropylene sheet, polystyrene sheet, polysulfonate sheet, epoxy resin sheet, phenol resin sheet, unsaturated polyester resin sheet, and polyimide resin sheet. The organic resin sheet may be appropriately subjected to a surface treatment or the like.

The first and second laminated glass members may be made of the same material or different materials. For example, one may be inorganic glass and another may be organic glass, though it is preferred that both the first and second laminated glass members are inorganic glass or organic glass.

The thickness of each of the sheet glass for use in the first and second laminated glass members is not particularly limited, and is, for example, about 0.1 to 15 mm, preferably 0.5 to 5 mm. The thickness of each of the sheet glass may be the same or different from each other.

**In** the case where the first and second laminated glass members have a different thickness, the difference in thickness therebetween may be 0.1 mm or more, preferably 0.2 mm. The difference in thickness between the first and second laminated glass members is not particularly limited, and may be, for example, 2 mm or less, preferably 1 mm or less.

The first and second laminated glass members each may be a flat sheet glass or a bent glass. In the case where one of the first and second laminated glass members is flat sheet glass, the other is preferably flat sheet glass, and in the case where one of the first and second laminated glass members is bent glass, the other is preferably bent glass.

The bent glass has a bending radius in the longitudinal direction of preferably 4000 mm or more, more preferably 6000 mm or more, still more preferably 8000 mm or more, and preferably 25000 mm or less, more preferably 20000 mm or less, still more preferably 15000 mm or less. The lower and upper limits of the bending radius may be in any combination.

The production method of the laminated glass is not particularly limited. The laminated glass may be obtained by sandwiching an interlayer film between two laminated glass members and press-bonding them together.

More specifically, an interlayer film is sandwiched between the first and second laminated glass members, and air remaining between the two glass members and the interlayer film is removed by passing the whole through a pressing roll or by placing the whole in a rubber bag to be subjected to vacuum suction. Then, pre-bonding is performed at about 70 to 110°C to obtain a laminate. The laminate is then placed in an autoclave or pressed so that the press-bonding is performed at about 120 to 150°C and a pressure of 1 to 1.5 MPa. In this manner, a laminated glass can be obtained.

The interlayer film and laminated glass of the present invention may be used in various vehicles such as automobiles, railroad cars, airplanes, and ships, as well as in buildings. Use in display device applications such as surface protection panels for various display devices such as liquid crystal displays and organic EL displays is also achieved. The interlayer film and laminated glass may also be used in applications other than these. The interlayer film and laminated glass are preferably interlayer films and laminated glass for vehicles or buildings, and more preferably interlayer films and laminated glass for vehicles.

### Examples

The present invention will be described in more detail with reference to Example as follows. However, the present invention is not limited to the following Examples.

The methods for measuring and evaluating each physical properties are as follows.

### [Optical properties of laminated glass]

### (L*, a*, b* and Tv)

The optical spectrum of the laminated glass was measured using a spectrophotometer ("U-4100" manufactured by Hitachi High-Tech Corporation (light source: deuterium lamp, 50-W halogen lamp)) in accordance with JIS R3212 (2015). During the measurement of spectrum transmittance, the laminated glass was placed at a position 13 cm away from the integrating sphere on the optical path between the light source and the integrating sphere, parallel to the normal of the optical axis, such that only parallel light transmitted through the laminated glass was received by the integrating sphere. The measurement conditions included a scan speed of 300 nm/min and a slit width of 8 nm, and the other measurement conditions for measurement of L*, a* and b* included use of CIE standard illuminant D65 and 10° visual field color matching function specified in JIS Z 8781-1 (2012), JIS Z 8781-2 (2012), and JIS Z 8781-4 (2013). The visible light transmittance (Tv) was also measured in accordance with JIS R3212 (2015). The L*, a*, b*, and Tv were measured at 21 measurement points at 50-mm intervals from one end toward the other end of the laminated glass along the TD direction at the center position in the MD by moving the laminated glass. In the measurement, the laminated glass may be cut to an appropriate size on an as needed basis.

Furthermore, the ratio of measurement points having a Tv of 60% or more among all the measurement points of the laminated glass was calculated as the surface area ratio of the region having a Tv of 60% or more. Also, the number of regions with Tv decreasing from one end to the other end and the number of regions with Tv increasing were calculated according to the method described in the specification.

### [Optical properties of each resin layer]

For evaluation of the optical properties of each of the resin layers (colored layer and clear layer), each of the resin layers was scraped off from the interlayer film and from the scraped material, a resin film for evaluation with a thickness of 760 µm was prepared by press molding. The position of each the layers can be identified by cross-sectional measurement with a microscope or by elemental analysis using EDX analysis of the cross section.

The press molding was performed by pressing at 150°C and 100 kgf for 15 minutes. Two pieces of clear glass with a thickness of 2.5 mm were bonded together through a resin film for evaluation to obtain a laminated glass for measurement. The laminated glass for measurement was prepared in the same manner as in Example 1 described below. The clear glass for use was the standard clear glass described in the specification.

One surface of the laminated glass for measurement was irradiated with light, and the L*, a* and b* measured at a viewing angle of 10° on another surface of the laminated glass for measurement were defined as the L*, a* and b* of the resin layer. Similarly, the visible light transmittance (Tv) measured for the laminated glass for measurement was defined as Tv of the resin layer.

The light irradiation conditions and the measurement conditions for L*, a*, b*, and Tv were the same as those described in the [Optical properties of laminated glass] described above, and L*, a*, b*, and Tv of the resin layer were determined by averaging three measured values at optional positions.

The components for use in the following Examples and Comparative Examples were as follows:
PVB1: polyvinyl acetal resin, average degree of polymerization: 1700, amount of hydroxyl
groups: 30.3 mol%, degree of acetalization: 68.8 mol%, amount of acetyl groups: 0.9 mol%
PVB2: polyvinyl acetal resin, average degree of polymerization: 3000, amount of hydroxyl
groups: 23.8 mol%, degree of acetalization: 63.8 mol%, amount of acetyl groups: 12.4 mol%
Plasticizer: triethylene glycol-di-2-ethylhexanoate (3GO)
Colorant 1: PB15-1, Pigment Blue 15-1 (copper phthalocyanine pigment)
Colorant 2: PR202, Pigment Red 202 (quinacridone pigment)
Colorant 3: Pblack-7, Pigment Black 7 (Carbon Black)
Colorant 4: ITO, tin-doped indium oxide particles (heat-shielding material)
Colorant 5: CWO, cesium-doped tungsten oxide particles (heat-shielding material)

### [Example 1]

### (Preparation of interlayer film)

According to the formulation in Table 1, the components each were mixed to obtain a resin composition for a colored layer (1) and a resin composition for a colored layer (2). The resin composition for the colored layer (1) was supplied to a first extruder. Also, the resin composition for the colored layer (2) was supplied to a second extruder. An interlayer film having two-layer structure was obtained by co-extrusion using a co-extruder equipped with a multi-layer feed block at the tip of a first molten resin transport pipe connected to the tip of the first extruder and the tip of the second molten resin transport pipe connected to the tip of the second extruder. On this occasion, the gap width at each coordinate of TD was set, such that the flow path of each layer immediately before merging in the feed block has a cross section shown in Fig. 1. In addition, the colored layer (1) was the first resin layer 11, and the colored layer (2) was the second resin layer 12. The resulting interlayer film was cut to have a TD length of 1000 mm and an MD length of 1000 mm.

### (Preparation of laminated glass)

Subsequently, the cut interlayer film was sandwiched between a pair of clear glass (300 mm × 150 mm) to obtain a laminate. Incidentally, a plurality of pairs of clear glass were prepared for the measurement of corresponding measurement points, and the pairs of clear glass were bonded together with the interlayer film.

As the clear glass, the standard clear glass described in the specification was used. The resulting laminate was placed in a rubber bag, which was degassed at a vacuum degree of 2.6 kPa for 20 minutes, then transferred to an oven in the degassed state and further held at 90°C for 30 minutes to perform vacuum pressing, so that the laminate was pre-press bonded. The pre-pressed laminate was press-bonded in an autoclave under conditions at 135°C and a pressure of 1.2 MPa for 20 minutes to obtain a laminated glass. The optical properties of the resulting laminated glass were measured. The measurement results are shown in Tables 1 and 3. In addition, the optical properties, glass transition temperature, and thickness properties of each of the resin layers in the interlayer film are also shown in Table 1.

### [Examples 2 and 3]

The formulation of the resin composition was changed as shown in Tables 1 and 2, and the gap width at each coordinate of the TD of the flow path immediately before merging of resin layers each inside the mold was set so as to have cross-sections shown in Fig. 3 and Fig. 1. The resin compositions each were then co-extruded so as to obtain an interlayer film having a two-layer structure. From the resulting interlayer film, laminated glass was prepared in the same manner as in Example 1, and the optical properties of the resulting laminated glass were measured. The measurement results are shown in Tables 1 and 4. The optical properties, glass transition temperature, and thickness properties of the resin layer in the interlayer film are also shown together in Table 1.

### [Examples 4, 6, 7 and 9]

After changing the formulation of the resin composition as shown in Tables 1 and 2, the gap width at each coordinate of TD of each layer resin flow path immediately before the merging in the feed block was set so as to have the cross section shown in the drawings in Tables 1 and 2, and the resin composition each were co-extruded to obtain an interlayer film having a two-layer structure. In Examples 4, 6, 7, and 9, the laminate structure had a clear layer and a colored layer, and the first resin layer 11 was the clear layer and the second resin layer 12 was the colored layer. From the resulting interlayer film, laminated glass was prepared in the same manner as in Example 1, and the optical properties of the resulting laminated glass were measured. The measurement results are shown in Tables 1, 2, 5, 7, and 8. Also, the optical properties, glass transition temperature, and thickness properties of the resin layer in the interlayer film are also shown together in Tables 1 and 2.

### [Example 5]

According to the formulation in Table 1, the components each were mixed to obtain a resin composition for a clear layer, a resin composition for a colored layer (1), a resin composition for a colored layer (2), and a resin composition for a colored layer (3), and these resin compositions were supplied to the first to fourth extruders. An interlayer film having four-layer structure was obtained by co-extrusion using a co-extruder equipped with a multilayer feed block at the tips of first to fourth molten resin transport pipes connected to the respective tips of the first to fourth extruders. On this occasion, the gap width at each coordinate of TD in the flow path of resin for each layer immediately before merging in the feed block was set so as to have a cross section shown in Fig. 6, and the resin compositions each were co-extruded to obtain an interlayer film having a four-layer structure. Incidentally, in the interlayer film, the first resin layer 11 was the clear layer, the second resin layer 12 was the colored layer (1), the third resin layer 13 was the clear layer(2), and the fourth resin layer 14 was the clear layer(3). From the resulting interlayer film, a laminated glass was prepared in the same manner as in Example 1 so as to measure the optical properties of the resulting laminated glass. The measurement results are shown in Tables 1 and 6. The optical properties, glass transition temperature, and thickness properties of the resin layer in the interlayer film are also shown together in Table 1.

### [Example 8]

According to the formulation in Table 1, the components each were mixed to obtain a resin composition for a clear layer, a resin composition for a colored layer (1), and a resin composition for a colored layer (2) and these resin compositions were supplied to the first to third extruders. As described in Table 2, in the resin composition for the colored layer (1), two types of colorants (colorants 1 and 4) were blended in a blending amount described in Table 2. An interlayer film having three-layer structure was obtained by co-extrusion using a co-extruder equipped with a multi-layer feed block at the tips of first to third molten resin transport pipes connected to the respective tips of the first to third extruders. On this occasion, the gap width at each coordinate of TD in the flow path of each layer immediately before merging in the feed block was set to have a cross section shown in Fig. 7, and the resin compositions each were co-extruded to obtain an interlayer film having a three-layer structure. Incidentally, in the interlayer film, the first resin layer 11 was the colored layer (11), the second resin layer 12 was the colored layer (2), and the third resin layer 13 was the clear layer. From the resulting interlayer film, a laminated glass was prepared in the same manner as in Example 1 so as to measure the optical properties of the resulting laminated glass. The measurement results are shown in Table 2. The optical properties, glass transition temperature, and thickness properties of the resin layer in the interlayer film are also shown together in Table 2. The glass transition temperature of the colored layers (1) and (2) was 27°C, and the glass transition temperature of the clear layer was -4°C.

### [Comparative Example 1]

The components each were mixed according to the formulation in Table 2 to obtain a resin composition for the colored layer. Subsequently, the resin composition for the colored layer was then extruded such that the thickness was uniform along the TD, so that an interlayer film having a single-layer structure was obtained. From the resulting interlayer film, a laminated glass was prepared in the same manner as in Example 1, and the optical properties of the resulting laminated glass were measured. The measurement results are shown in Table 2. The optical properties, glass transition temperature, and thickness properties of the resin layer in the interlayer film are also shown together in Table 2.

### [Comparative Example 2]

The components each were mixed according to the formulation in Table 2 to obtain resin compositions for the clear layer and a resin composition for the colored layer (1). Subsequently, the resin compositions each were then extruded such that the thickness of each of the resin compositions was uniform along the TD, so that an interlayer film having a two-layer structure was obtained. From the resulting interlayer film, a laminated glass was prepared in the same manner as in Example 1, and the optical properties of the resulting laminated glass were measured. The measurement results are shown in Table 2. The optical properties, glass transition temperature, and thickness properties of the resin layer in the interlayer film are also shown together in Table 2.

**[Table 1]**

| | | | | Example 1 | Example 2 | Example 3 | Example 4 | Example 5 | Example 6 |
|---|---|---|---|---|---|---|---|---|---|
| Drawing | | | | Fig. 1 | Fig. 3 | Fig. 1 | Fig. 5 | Fig. 6 | Fig. 2 |
| Film thickness | | | mm | 0.76 | 0.76 | 0.76 | 0.76 | 0.76 | 0.76 |
| Number of layers having different color | | | - | 2(Col+Col) | 2(Col+Col) | 2(Col+Col) | 2(CLR+Col) | 4(CLR+Col*3) | 2(CLR+Col) |
| | Formulation | Resin | Type | - | - | - | PVB1 | PVB1 | PVB1 |
| | | | Part by mass | - | - | - | 100 | 100 | 100 |
| | | Plasticizer | Type | - | - | - | 3GO | 3GO | 3GO |
| | | | Part by mass | - | - | - | 38 | 38 | 38 |
| Clear layer (CLR) | Optical properties (760 µm) | Tv | % | - | - | - | 88.6 | 88.6 | 88.6 |
| | | L* | | - | - | - | 95.5 | 95.5 | 95.5 |
| | | a* | | - | - | - | -1.6 | -1.6 | -1.6 |
| | | b* | | - | - | - | 1.3 | 1.3 | 1.3 |
| | Glass transition temperature (Tg) | | °C | - | - | - | 27.0 | 27.0 | 27.0 |
| | Thickness | Minimum value | µm | - | - | - | 10 | 210 | 530 |
| | | Maximum value | µm | - | - | - | 740 | 460 | 740 |
| | | Average value value: | µm | | | | 375 | 335 | 635 |
| | Formulation | Average Resin | Type | PVB1 | PVB1 | PVB1 | PVB1 | PVB1 | PVB1 |
| | | | Part by mass | 100 | 100 | 100 | 100 | 100 | 100 |
| | | Plasticizer | Type | 3GO | 3GO | 3GO | 3GO | 3GO | 3GO |
| | | | Part by mass | 38 | 38 | 38 | 38 | 38 | 38 |
| | | Colorant | Type | 1 | 1 | 1 | 3 | 1 | 3 |
| | | | mass% | 0.0042 | 0.0053 | 0.0043 | 0.0507 | 0.0038 | 0.0570 |
| Colored layer (Col) | Optical properties (760 µm thick) | Tv | % | 74.4 | 71.5 | 74.1 | 2.7 | 75.5 | 1.7 |
| | | L* | - | 90.6 | 89.6 | 90.5 | 17.1 | 91.1 | 12.5 |
| | | a* | - | -7.6 | -8.8 | -7.7 | 5.0 | -7.2 | 5.2 |
| | | b* | - | -6.3 | -8.0 | -6.5 | 16.0 | -5.7 | 15.2 |
| | Glass transition temperature (Tg) | | °C | 27 | 27 | 27 | 27 | 27 | 27 |
| | Thickness | Minimum value | µm | 360 | 360 | 300 | 20 | 50 | 20 |
| | | Maximum value | µm | 600 | 500 | 700 | 750 | 400 | 230 |
| | | Average value | µm | 480 | 430 | 500 | 385 | 225 | 125 |
| | Formulation | Resin | Type | PVB1 | PVB1 | PVB1 | - | PVB1 | - |
| | | | Part by mass | 100 | 100 | 100 | - | 100 | - |
| | | Plasticizer | Type | 3GO | 3GO | 3GO | - | 3GO | - |
| | | | Part by mass | 38 | 38 | 38 | - | 38 | - |
| | | Colorant | Type | 2 | 2 | 2 | - | 2 | - |
| | | | mass% | 0.0114 | 0.0143 | 0.1267 | - | 0.0061 | - |
| | Optical properties (760 µm thick) | Tv | % | 74.3 | 71.3 | 26.9 | - | 80.4 | - |
| Colored layer (Col) | | L* | - | 89.1 | 87.7 | 54.8 | - | 92.0 | - |
| | | a* | - | 4.4 | 5.9 | 54.0 | - | 1.6 | - |
| | | b* | - | -5.4 | -6.9 | -28.1 | - | -2.5 | - |
| | Glass transition temperature (Tg) | | °C | 27 | 27 | 27 | - | 27 | - |
| | Thickness | Minimum value | µm | 160 | 260 | 60 | - | 50 | - |
| | | Maximum value | µm | 400 | 400 | 460 | - | 400 | - |
| | | Average value | µm | 280 | 330 | 260 | - - | 225 | - - |
| | Formulation | Resin | Type | - | - | - | - | PVB2 | - |
| | | | Part by mass | - | - | - | - | 100 | - |
| | | Plasticizer | Type | - | - | - | - | 3GO | - |
| | | | Part by mass | - | - | - | - | 38 | - |
| | | Colorant | Type | - | - | - | - | 3 | - |
| Colored layer (Col) | | | mass% | - | - | - | - | 0.0008 | - |
| | Optical properties (760 µm thick) | Tv | % | - | - | - | - | 84.0 | - |
| | | L* | - | - | - | - | - | 93.4 | - |
| | | a* | - | - | - | - | - | -1.4 | - |
| | | b* | - | - | - | - | - | 2.1 | - |
| | Glass transition temperature (Tg) | | °C | - | - | - | - | 27 | - |
| | Thickness | Minimum value | µm | - | - | - | - | 100 | - |
| | | Maximum value | µm | - | - | - | - | 100 | - |
| | | Averaae value | µm | - | - | - | - | 100 | - |
| | Spot at minimum value | Tv | % | 73.3 | 70.4 | 32.8 | 2.8 | 79.6 | 2.0 |
| | | L* | - | 89.6 | 88.3 | 63.1 | 17.7 | 92.4 | 13.9 |
| | | a* | - | -5.5 | -4.4 | -2.2 | -1.3 | -5.4 | -1.2 |
| | | b* | - | -6.4 | -8.0 | -28.2 | 2.8 | -3.0 | 2.9 |
| | Spot at maximum value 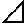 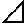 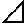 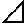 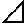 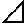 | Tv | % | 74.0 | 70.8 | 64.3 | 80.7 | 84.6 | 79.7 |
| | | L* | - | 90.2 | 88.7 | 85.6 | 91.9 | 94.1 | 91.5 |
| Measurement results | | a* | - | -2.5 | -2.1 | 32.1 | 5.0 | -2.6 | 5.1 |
| | | b* | - | -6.4 | -8.0 | -11.4 | 16.1 | -0.3 | 15.5 |
| | Difference | Tv | % | 0.6 | 0.4 | 31.4 | 77.9 | 5.0 | 77.7 |
| | | L* | - | 0.6 | 0.4 | 22.4 | 74.3 | 1.6 | 77.6 |
| | | a* | - | 3.0 | 2.3 | 34.4 | 6.3 | 2.8 | 6.4 |
| | | 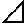 b* | - | 0.1 | 0.0 | 16.8 | 13.3 | 2.7 | 12.5 |
| | | L*- 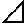 a* | - | -2.4 | -1.8 | -11.9 | 68.0 | -1.2 | 71.2 |
| | | L*- 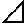 b* | - | 0.6 | 0.4 | 5.6 | 60.9 | -1.1 | 65.0 |
| | | L*+ 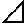 a*+ 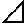 b* | - | 3.7 | 2.7 | 73.6 | 93.9 | 7.1 | 96.5 |
| Number of regions with Tv decreasing from one end toward another end | | | - | - | 1 | 2 | 3 | 1 | - |
| Number of regions with Tv increasing from one end toward another end | | | - | 1 | 1 | 1 | 3 | 1 | 1 |
| Regions having Tv of 60% or more (area ratio) | | | % | 100 | 100 | 13 | 57 | 100 | 76 |
| Content ratio of colorant in the whole interlayer film (mass%) | | | % | 0.0069 | 0.0092 | 0.0462 | 0.0257 | 0.0030 | 0.0094 |

**[Table 2]**

| | | | | Example 7 | Example 8 | Example 9 | Comparative Example 1 | Comparative Example 3 |
|---|---|---|---|---|---|---|---|---|
| Drawing | | | | Fig. 4 | Fig. 7 | Fig. 1 | | |
| Film thickness | | | mm | 0.76 | 0.76 | 0.3 | 0.3 | 0.76 |
| Number of layers having different color | | | - | 2(CLR+Col) | 3(Col+CLR+Col) | 2(CLR+Col) | 1 (Col) | 2(CLR+Col) |
| | Formulation | Resin | Type | PVB1 | PVB2 | PVB1 | PVB1 | PVB1 |
| | | | Part by mass | 100 | 100 | 100 | 100 | 100 |
| | | Plasticizer | Type | 3GO | 3GO | 3GO | 3GO | 3GO |
| | | | Part by mass | 38 | 70 | 38 | - | 38 |
| Clear layer (CLR) | Optical properties | Tv | % | 88.6 | 88.6 | 88.6 | - | 88.6 |
| | | L* | | 95.5 | 95.5 | 95.5 | - | 95.5 |
| | | a* | | -1.6 | -1.6 | -1.6 | - | -1.6 |
| | | b* | | 1.3 | 1.3 | 1.3 | - | 1.3 |
| | Glass transition temperature (Tg) | | °C | 27.0 | -4.0 | 27.0 | - | 27.0 |
| | Thickness | Minimum value | µm | 530 | 100 | 100 | - | 360 |
| | | Maximum value | µm | 740 | 100 | 200 | - | 360 |
| | | Average value | µm | 635 | 100 | 150 | - | 360 |
| | Formulation | Resin | Type | PVB1 | PVB1 | PVB1 | PVB1 | PVB1 |
| | | | Part by mass | 100 | 100 | 100 | 100 | 100 |
| | | Plasticizer | Type | 3GO | 3GO | 3GO | 3GO | 3GO |
| | | | Part by mass | 38 | 38 | 38 | 38 | 38 |
| | | Colorant | Type | 3 | 1,4 | 3 | 3 | 2 |
| Colored layer (Col) | | | mass% | 0.0570 | 0.0002, 1.52 | 0.0150 | 0.0100 | 0.0304 |
| | Optical properties (760 µm thick) | Tv | % | 1.7 | 75.5 | 31.2 | 67.3 | 65.9 |
| | | L* | - | 12.5 | 89.9 | 61.5 | 85.3 | 84.9 |
| | | a* | - | 5.2 | -4.3 | 1.5 | -0.7 | 8.9 |
| | | b* | - | 15.2 | 2.6 | 12.8 | 5.4 | -9.6 |
| | Glass transition temperature (Tg) | | °C | 27 | 27 | 27 | | |
| | Thickness | Minimum value | µm | 20 | 200 | 100 | 300 | 360 |
| | | Maximum value | µm | 230 | 400 | 200 | 300 | 360 |
| | | Average value | µm | 125 | 300 | 150 | 300 | 360 |
| | Formulation | Resin | Type | - | PVB1 | - | - | - |
| | | | Part by mass | - | 100 | - | - | - |
| | | Plasticizer | Type | - | 3GO | - | - | - |
| | | | Part by mass | - | 38 | - | - | - |
| | | Colorant | Type | - | 5 | - | - | - |
| Colored layer (Col) | | | Part by mass | - | 0.2923 | - | - | - |
| | Optical properties (760 µm thick) | Tv | % | - | 57.7 | - | - | - |
| | | L* | - | - | 81.8 | - | - | - |
| | | a* | - | - | -0.4 | - | - | - |
| | | b* | - | - | -0.6 | - | - | - |
| | Glass transition temperature (Tg) | | °C | - | 27 | - | - | - |
| | Thickness | Minimum value | µm | - | 260 | - | - | - |
| | | Maximum value | µm | - | 460 | - | - | - |
| | | Average value | µm | - | 360 | - | - | - |
| | Formulation | Resin | Type | - | - | - | - | - |
| | | | Part by mass | - | - | - | - | - |
| | | Plasticizer | Type | - | - | - | - | - |
| | | | Part by mass | - | - | - | - | - |
| | | Colorant | Type | - | - | - | - | - |
| Colored layer (Col) | | | Part by mass | - | - | - | - | - |
| | Optical properties (760 µm thick) | Tv | % | - | - | - | - | - |
| | | L* | - | - | - | - | - | - |
| | | a* | - | - | - | - | - | - |
| | | b* | - | - | - | - | - | - |
| | Glass transition temperature (Tg) | | °C | - | - | - | - | - |
| | Thickness | Minimum value | µm | - | - | - | - | - |
| | | Maximum value | µm | - | - | - | - | - |
| | | Average value Average value | µm | - | - | - | - | - |
| | Spot at minimum value | Tv | % | 2.0 | 65.4 | 67.3 | 83.8 | 65.9 |
| | | L* | - | 13.9 | 85.6 | 85.3 | 93.4 | 84.9 |
| | | a* | - | -1.2 | -7.2 | -1.1 | -0.9 | 8.9 |
| | | b* | - | 2.9 | 0.4 | 3.4 | 1.5 | -9.6 |
| | Spot at maximum value 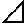 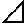 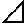 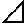 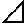 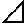 | Tv | % | 79.7 | 70.2 | 77.2 | 83.8 | 65.9 |
| | | L* | - | 91.5 | 87.7 | 90.3 | 93.4 | 84.9 |
| | | a* | - | 5.1 | -5.9 | -0.7 | -0.9 | 8.9 |
| Measurement results | | b* | - | 15.5 | 1.3 | 5.4 | 1.5 | -9.6 |
| | Difference | Tv | % | 77.7 | 4.8 | 9.9 | 0.0 | 0.0 |
| | | L* | - | 77.6 | 2.2 | 5.0 | 0.0 | 0.0 |
| | | a* | - | 6.4 | 1.3 | 0.4 | 0.0 | 0.0 |
| | | 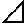 b* | - | 12.5 | 0.9 | 1.9 | 0.0 | 0.0 |
| | | L*- 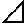 a* | - | 71.2 | 0.8 | 4.6 | 0.0 | 0.0 |
| | | L*- 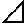 b* | - | 65.0 | 1.3 | 3.0 | 0.0 | 0.0 |
| | | L*+ 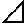 a*+ 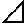 b* | - | 96.5 | 4.4 | 7.3 | 0.0 | 0.0 |
| Number of regions with Tv decreasing from one end toward another end | | | - | 1 | - | - | 0 | 0 |
| Number of regions with Tv increasing from one end toward another end | | | - | 1 | 1 | 1 | 0 | 0 |
| Regions having Tv of 60% or more (area ratio) | | | % | 47 | 100 | 100 | 100 | 100 |
| Content ratio of colorant in the whole interlayer film (mass%) | | | % | 0.0094 | 0.7385 | 0.0075 | 0.0100 | 0.0304 |

In the following Tables 3 to 8, the Tv, L*, a* and b* at each of the representative measurement points in Examples 1, 2, and 4 to 7 are shown. Note that in the following Tables each, a distance means the distance from one end.

**[Table 3]**

| Example 1 | | | | |
|---|---|---|---|---|
| Distance (mm) | Tv (%) | L* | a* | b* |
| 0 | 73.3 | 89.6 | -2.5 | -6.4 |
| 50 | 73.3 | 89.6 | -2.7 | -6.4 |
| 100 | 73.4 | 89.6 | -2.8 | -6.4 |
| 150 | 73.4 | 89.7 | -3.0 | -6.4 |
| 200 | 73.4 | 89.7 | -3.1 | -6.4 |
| 250 | 73.5 | 89.7 | -3.3 | -6.4 |
| 300 | 73.5 | 89.8 | -3.4 | -6.4 |
| 350 | 73.5 | 89.8 | -3.6 | -6.4 |
| 400 | 73.6 | 89.8 | -3.7 | -6.4 |
| 450 | 73.6 | 89.9 | -3.9 | -6.4 |
| 500 | 73.6 | 89.9 | -4.0 | -6.4 |
| 550 | 73.7 | 89.9 | -4.2 | -6.4 |
| 600 | 73.7 | 89.9 | -4.3 | -6.4 |
| 650 | 73.7 | 90.0 | -4.5 | -6.4 |
| 700 | 73.8 | 90.0 | -4.6 | -6.4 |
| 750 | 73.8 | 90.0 | -4.8 | -6.4 |
| 800 | 73.8 | 90.1 | -4.9 | -6.4 |
| 850 | 73.9 | 90.1 | -5.1 | -6.4 |
| 900 | 73.9 | 90.1 | -5.2 | -6.4 |
| 950 | 73.9 | 90.2 | -5.4 | -6.4 |
| 1000 | 74.0 | 90.2 | -5.5 | -6.4 |

**[Table 4]**

| Example 2 | | | | |
|---|---|---|---|---|
| Distance (mm) | Tv (%) | L* | a* | b* |
| 0 | 70.4 | 88.3 | -2.1 | -8.0 |
| 50 | 70.5 | 88.4 | -2.6 | -8.0 |
| 100 | 70.6 | 88.4 | -2.9 | -8.0 |
| 150 | 70.6 | 88.5 | -3.3 | -8.0 |
| 200 | 70.7 | 88.6 | -3.6 | -8.0 |
| 250 | 70.7 | 88.6 | -3.8 | -8.0 |
| 300 | 70.7 | 88.7 | -4.0 | -8.0 |
| 350 | 70.8 | 88.7 | -4.2 | -8.0 |
| 400 | 70.8 | 88.7 | -4.3 | -8.0 |
| 450 | 70.8 | 88.7 | -4.4 | -8.0 |
| 500 | 70.8 | 88.7 | -4.4 | -8.0 |
| 550 | 70.8 | 88.7 | -4.4 | -8.0 |
| 600 | 70.8 | 88.7 | -4.3 | -8.0 |
| 650 | 70.8 | 88.7 | -4.2 | -8.0 |
| 700 | 70.7 | 88.7 | -4.0 | -8.0 |
| 750 | 70.7 | 88.6 | -3.8 | -8.0 |
| 800 | 70.7 | 88.6 | -3.6 | -8.0 |
| 850 | 70.6 | 88.5 | -3.3 | -8.0 |
| 900 | 70.6 | 88.4 | -2.9 | -8.0 |
| 950 | 70.5 | 88.4 | -2.6 | -8.0 |
| 1000 | 70.4 | 88.3 | -2.1 | -8.0 |

**[Table 5]**

| Example 4 | | | | |
|---|---|---|---|---|
| Distance (mm) | Tv (%) | L* | a* | b* |
| 0 | 80.7 | 91.9 | -1.3 | 2.8 |
| 50 | 80.7 | 91.9 | -1.3 | 2.8 |
| 100 | 74.0 | 81.9 | -0.6 | 4.9 |
| 150 | 8.0 | 27.7 | 4.3 | 14.0 |
| 200 | 2.8 | 17.7 | 5.0 | 16.1 |
| 250 | 8.0 | 27.7 | 4.3 | 14.0 |
| 300 | 74.0 | 81.9 | -0.6 | 4.9 |
| 350 | 80.7 | 91.9 | -1.3 | 2.8 |
| 400 | 74.0 | 81.9 | -0.6 | 4.9 |
| 450 | 8.0 | 27.7 | 4.3 | 14.0 |
| 500 | 2.8 | 17.7 | 5.0 | 16.1 |
| 550 | 8.0 | 27.7 | 4.3 | 14.0 |
| 600 | 74.0 | 81.9 | -0.6 | 4.9 |
| 650 | 80.7 | 91.9 | -1.3 | 2.8 |
| 700 | 74.0 | 81.9 | -0.6 | 4.9 |
| 750 | 8.0 | 27.7 | 4.3 | 14.0 |
| 800 | 2.8 | 17.7 | 5.0 | 16.1 |
| 850 | 8.0 | 27.7 | 4.3 | 14.0 |
| 900 | 74.0 | 81.9 | -0.6 | 4.9 |
| 950 | 80.7 | 91.9 | -1.3 | 2.8 |
| 1000 | 80.7 | 91.9 | -1.3 | 2.8 |

**[Table 6]**

| Example 5 | | | | |
|---|---|---|---|---|
| Distance (mm) | Tv (%) | L* | a* | b* |
| 0 | 79.6 | 92.4 | -5.4 | -3.0 |
| 50 | 80.4 | 92.7 | -5.2 | -2.6 |
| 100 | 81.1 | 93.0 | -5.0 | -2.2 |
| 150 | 81.8 | 93.2 | -4.8 | -1.9 |
| 200 | 82.4 | 93.4 | -4.6 | -1.6 |
| 250 | 82.9 | 93.6 | -4.4 | -1.3 |
| 300 | 83.4 | 93.7 | -4.2 | -1.1 |
| 350 | 83.8 | 93.9 | -4.0 | -0.9 |
| 400 | 84.1 | 94.0 | -3.7 | -0.7 |
| 450 | 84.4 | 94.0 | -3.5 | -0.6 |
| 500 | 84.6 | 94.1 | -3.3 | -0.5 |
| 550 | 84.7 | 94.1 | -3.0 | -0.4 |
| 600 | 84.7 | 94.1 | -2.8 | -0.3 |
| 650 | 84.7 | 94.1 | -2.6 | -0.3 |
| 700 | 84.6 | 94.0 | -2.3 | -0.3 |
| 750 | 84.5 | 93.9 | -2.1 | -0.4 |
| 800 | 84.3 | 93.8 | -1.8 | -0.5 |
| 850 | 84.0 | 93.7 | -1.5 | -0.6 |
| 900 | 83.6 | 93.5 | -1.3 | -0.7 |
| 950 | 83.2 | 93.3 | -1.0 | -0.9 |
| 1000 | 82.7 | 93.1 | -0.7 | -1.1 |

**[Table 7]**

| Example 6 | | | | |
|---|---|---|---|---|
| Distance (mm) | Tv (%) | L* | a* | b* |
| 0 | 79.7 | 91.6 | -0.6 | 2.4 |
| 50 | 79.7 | 91.6 | -0.6 | 2.4 |
| 100 | 79.7 | 91.6 | -0.6 | 2.4 |
| 150 | 79.7 | 91.6 | -0.6 | 2.4 |
| 200 | 79.7 | 91.6 | -0.6 | 2.4 |
| 250 | 79.7 | 91.6 | -0.6 | 2.4 |
| 300 | 79.7 | 91.6 | -0.6 | 2.4 |
| 350 | 79.7 | 91.6 | -0.6 | 2.4 |
| 400 | 79.7 | 91.6 | -0.6 | 2.4 |
| 450 | 79.7 | 91.6 | -0.6 | 2.4 |
| 500 | 79.7 | 91.6 | -0.6 | 2.4 |
| 550 | 79.7 | 91.6 | -0.6 | 2.4 |
| 600 | 79.7 | 91.6 | -0.6 | 2.4 |
| 650 | 79.7 | 91.6 | -0.6 | 2.4 |
| 700 | 79.7 | 91.6 | -0.6 | 2.4 |
| 750 | 79.7 | 91.6 | -0.6 | 2.4 |
| 800 | 2.0 | 13.9 | 5.1 | 15.5 |
| 850 | 2.0 | 13.9 | 5.1 | 15.5 |
| 900 | 2.0 | 13.9 | 5.1 | 15.5 |
| 950 | 2.0 | 13.9 | 5.1 | 15.5 |
| 1000 | 2.0 | 13.9 | 5.1 | 15.5 |

**[Table 8]**

| Example 7 | | | | |
|---|---|---|---|---|
| Distance (mm) | Tv (%) | L* | a* | b* |
| 0 | 2.0 | 13.9 | 5.1 | 15.5 |
| 50 | 2.0 | 13.9 | 5.1 | 15.5 |
| 100 | 2.0 | 13.9 | 5.1 | 15.5 |
| 150 | 79.7 | 91.6 | -0.6 | 2.4 |
| 200 | 79.7 | 91.6 | -0.6 | 2.4 |
| 250 | 79.7 | 91.6 | -0.6 | 2.4 |
| 300 | 79.7 | 91.6 | -0.6 | 2.4 |
| 350 | 79.7 | 91.6 | -0.6 | 2.4 |
| 400 | 79.7 | 91.6 | -0.6 | 2.4 |
| 450 | 79.7 | 91.6 | -0.6 | 2.4 |
| 500 | 79.7 | 91.6 | -0.6 | 2.4 |
| 550 | 79.7 | 91.6 | -0.6 | 2.4 |
| 600 | 79.7 | 91.6 | -0.6 | 2.4 |
| 650 | 2.0 | 13.9 | 5.1 | 15.5 |
| 700 | 2.0 | 13.9 | 5.1 | 15.5 |
| 750 | 2.0 | 13.9 | 5.1 | 15.5 |
| 800 | 2.0 | 13.9 | 5.1 | 15.5 |
| 850 | 2.0 | 13.9 | 5.1 | 15.5 |
| 900 | 2.0 | 13.9 | 5.1 | 15.5 |
| 950 | 2.0 | 13.9 | 5.1 | 15.5 |
| 1000 | 2.0 | 13.9 | 5.1 | 15.5 |

As described above, the laminated glass produced from the interlayer film of each Example had a value of ΔL* + Δa* + Δb* measured from one end to the other end of 0.5% or more, and an absolute value of the difference between the maximum and minimum values of visible light transmittance (Tv) of 0.1% or more, so that excellent aesthetic quality was achieved.

In contrast, in Comparative Examples 1 and 2, the value of ΔL* + Δa* + Δb* obtained by measuring from one end to the other end was less than 0.5%, and the absolute value of the difference between the maximum and minimum values of visible light transmittance (Tv) was also less than 0.1%, so that the aesthetic quality was not sufficiently enhanced.

The interlayer film of Example 5 further satisfied the requirements of ΔL*<Δa* and ΔL*<Δb* (requirement (A-2)), and had dominant change in hue. As a result, high aesthetic quality was achieved by changing coloration while maintaining a certain degree of unity in color tone. In addition, the Tv value was high on the whole, reaching 60% or more in all regions, which allows the interlayer film to be highly useful in applications requiring high transparency.

The interlayer film in Examples 4, and 6 to 9, satisfied the requirements ΔL*>Δa* and ΔL*>Δb* (requirement (A-1)), so that the change in color density was relatively dominant. As a result, the aesthetic quality was enhanced by changing color tone while maintaining a certain degree of uniformity in the tint. Among them, in Examples 4, 6 and 7, the interlayer film had large values of ΔL*, Δb*, Δa* and ΔTv allowing aesthetic quality to give a strong impression due to the change in color, and a sufficient range of region with high values of Tv, making them suitable for use in window glass applications. Further, in Examples 8 and 9, the interlayer film had high values of Tv on the whole, with a Tv of 60% or more in all regions, making them highly useful in applications requiring high transparency.

Furthermore, the interlayer films in Examples 1 to 3 satisfied both requirements (A-1) and (A-2), so that high aesthetic quality was ensured through well-balanced changes in color density and hue. Among them, in Example 3, the interlayer film had large values of ΔL*, Δb*, Δa* and ΔTv allowing aesthetic quality to give a strong impression due to the change in color, and a sufficient range of region with high values of Tv, making it suitable for use in window glass applications or the like.

### Reference Signs List

10A to 10G: Interlayer film for laminated glass
11: First resin layer
12: Second resin layer
13: Third resin layer
14: Fourth resin layer
15A: One end
15B: The other end

## Claims

1. An interlayer film for laminated glass for laminated glass comprising one or more resin layers, at least one of the resin layers comprising a colorant, and the value of ΔL*+Δa*+Δb* being 0.5 or more,
wherein the absolute values of the differences between the maximum and minimum values of L*, a* and b* measured from one end to the other end of a laminated glass including two sheets of clear glass with a thickness of 2.5 mm bonded through the interlayer film for laminated glass are represented by ΔL*, Δa* and Δb*, respectively.

2. The interlayer film for laminated glass according to claim 1, satisfying at least one of ΔL*≥Δa* or ΔL*≥Δb*.

3. The interlayer film for laminated glass according to claim 1, satisfying at least one of ΔL*<Δa* or ΔL*<Δb*.

4. An interlayer film for laminated glass comprising one or more resin layers, at least one of the resin layers comprising a colorant, and the absolute value of the difference between the maximum and minimum values of visible light transmittance (Tv) measured from one end to the other end of a laminated glass including two sheets of clear glass with a thickness of 2.5 mm bonded through the interlayer film for laminated glass being 0.1% or more.

5. The interlayer film for laminated glass according to claim 4, having at least one of a region in which the visible light transmittance (Tv) decreases from one end to the other end or a region in which the visible light transmittance (Tv) increases from one end to the other end.

6. The interlayer film for laminated glass according to any one of the claims 1 to 3, wherein the absolute value of the difference between maximum and minimum values of visible light transmittance (Tv) measured across the laminated glass from one end to the other end is 0.1% or more.

7. The interlayer film for laminated glass according to any one of claims 1 to 5, wherein at least one of the one or more resin layers comprises at least one selected from the group consisting of a polyvinyl acetal resin and an ethylene-vinyl acetate copolymer resin.

8. The interlayer film for laminated glass according to claim 7, comprising a layer other than the resin layer comprising at least one selected from the group consisting of a polyvinyl acetal resin and an ethylene-vinyl acetate copolymer resin.

9. The interlayer film for laminated glass according to any one of claims 1 to 5, comprising at least two resin layers such that at least one of L*, a* and b* measured for respective laminated glasses for measurement including two sheets of clear glass with a thickness of 2.5 mm bonded through each of the resin layers is different from each other.

10. The interlayer film for laminated glass according to any one of claims 1 to 5, wherein at least one of the one or more resin layers has a glass transition temperature of 15°C or more.

11. The interlayer film for laminated glass according to any one of claims 1 to 5, wherein at least one of the one or more resin layers has a glass transition temperature of less than 15°C.

12. The interlayer film for laminated glass according to any one of claims 1 to 5, wherein the area ratio of a region having a visible light transmittance (Tv) of 60% or more measured in the laminated glass is 30% or more.

13. The interlayer film for laminated glass according to any one of the claims 1 to 5, wherein the minimum value of visible light transmittance (Tv) measured in the laminated glass is 50% or more.

14. The interlayer film for laminated glass according to any one of claims 1 to 5, wherein the minimum value of visible light transmittance (Tv) measured in the laminated glass is 70% or more.

15. The interlayer film for laminated glass according to any one of claims 1 to 5, comprising at least one resin layer such that a visible light transmittance (Tv) measured for a laminated glass for measurement having two sheets of clear glass with a thickness of 2.5 mm bonded through the resin layer is less than 87%.

16. The interlayer film for laminated glass according to any one of claims 1 to 5, having a thickness of 2 mm or less.

17. The interlayer film for laminated glass according to any one of claims 1 to 5, having a content of colorant of 0.00001 mass% or more and 7 mass% or less.

18. A laminated glass comprising an interlayer film for laminated glass according to any one of claims 1 to 5, and a pair of laminated glass members,
wherein the interlayer film for laminated glass is disposed between a pair of the laminated glass members.
